(19) **Europäisches Patentamt / European Patent Office / Office européen des brevets**

(11) **EP 4 200 930 B1**

(12) **EUROPEAN PATENT SPECIFICATION**

(45) Date of publication and mention
of the grant of the patent:
**03.06.2026 Bulletin 2026/23**

(21) Application number: **21762522.7**

(22) Date of filing: **18.08.2021**

(51) International Patent Classification (IPC):
*H01M 8/10* (2016.01)    *H01M 8/1039* (2016.01)
*H01M 8/1053* (2016.01)   *H01M 8/106* (2016.01)
*H01M 8/1062* (2016.01)   *H01M 8/1067* (2016.01)
*H01M 8/1069* (2016.01)   *H01M 8/1081* (2016.01)
*H01M 8/18* (2006.01)     *H01M 8/1018* (2016.01)

(52) Cooperative Patent Classification (CPC):
**H01M 8/188; H01M 8/1039; H01M 8/1053;
H01M 8/106; H01M 8/1062; H01M 8/1067;
H01M 8/1069; H01M 8/1081;** H01M 2008/1095;
Y02E 60/50; Y02P 70/50

(86) International application number:
**PCT/IB2021/057604**

(87) International publication number:
**WO 2022/038543 (24.02.2022 Gazette 2022/08)**

(54) **COMPOSITE ELECTROLYTE MEMBRANE AND COMPOSITE ELECTROLYTE MEMBRANE-ELECTRODE ASSEMBLY THEREWITH**

VERBUND-ELEKTROLYTMEMBRAN UND
VERBUND-ELEKTROLYTMEMBRAN-ELEKTRODENANORDNUNG DAMIT

MEMBRANE ÉLECTROLYTIQUE COMPOSITE ET ENSEMBLE MEMBRANE ÉLECTROLYTIQUE
COMPOSITE-ÉLECTRODE LA COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2020 US 202063067627 P**

(43) Date of publication of application:
**28.06.2023 Bulletin 2023/26**

(73) Proprietors:
• **W. L. Gore & Associates, Inc.
Newark, DE 19711 (US)**
• **W. L. Gore & Associates G.K.
Tokyo, Tokyo 108-0075 (JP)**

(72) Inventors:
• **SUZUKI, Takeyuki
Tokyo, Tokyo 108--0075 (JP)**
• **AGAPOV, Alexander
Newark, Delaware 19711 (US)**
• **HAMAMOTO, Taichi
Tokyo, Tokyo 108--0075 (JP)**

(74) Representative: **HGF
HGF Limited
4th Floor, 1 City Square
Leeds LS1 2ES (GB)**

(56) References cited:
**EP-A1- 2 800 194        WO-A1-2013/101299
WO-A1-2014/188265      WO-A1-2020/023057**

## Description

### Field

The present disclosure relates to improved composite electrolyte membranes with low swelling properties, membrane-electrode assemblies and electrochemical devices comprising said membranes, and methods of manufacturing said membranes.

### Background

Redox flow batteries comprise two half-cells, each comprising a liquid electrolyte reservoir (catholyte and anolyte), separated by an electrolyte membrane. The electrolyte membrane acts as a physical and electrical separator, which prevents the crossover of active species between half-cells, while allowing movement of protons between electrolyte reservoirs for the balancing of charge.

Electrolyte membranes (e.g. composite polymer electrolyte membranes) employed in redox flow batteries are commonly sandwiched between two electrodes (cathode and anode), each electrode compressed against an opposite surface of the electrolyte membrane. The electrolyte membrane and the electrodes are usually sandwiched between two bipolar plates and held together by a frame to create a redox flow battery cell. Redox flow battery systems often comprise stacks of redox flow battery cells connected in series.

Electrolyte membranes must be capable of being easily integrated in cell stacks. Commonly, two approaches for assembling electrolyte membranes in redox flow battery cell stacks are employed: wet assembly and dry assembly.

In the wet assembly approach, the electrolyte membrane is pre-wetted with water in order to swell the membrane before the electrodes are compressed against the membrane and the complete system is held together with a frame. In the dry assembly approach, all elements of the battery cell are assembled in dry conditions and the membrane enters in contact with the solvent of the electrolyte solutions once the cell is assembled.

Upon contact with the liquid electrolyte, the electrolyte membranes uptake at least some liquid from the electrolyte solution (commonly water), causing swelling of the membrane. This swelling can alter the properties of the membrane in operation compared to initial measurements performed on the membrane in dry conditions. For example, upon contact with the electrolyte, the membrane absorbs some liquid and often swells, resulting in a change in dimensions of the membrane. This can cause sagging of the membrane which may decrease the performance of the membrane in operation. Additionally, this change in dimensions upon swelling may result in damage to the membrane due to wrinkling, folding, pushing against other cell components.

The advantage of the dry assembly approach is that it involves less steps than the wet assembly approach, and therefore the assembly efficiency can be improved, and the manufacture cost can be minimized. However, state of the art membranes that are assembled using the dry approach may change dimensions upon swelling in contact with electrolyte fluid and may cause damage to the membrane. In contrast, membranes assembled using the wet approach tend to undergo fewer dimension changes from assembly into the cell to operation of the battery, and therefore there is a lower risk of damage to the electrolyte membrane after assembly in the cell.

In addition, electrolyte membranes that swell considerably upon contact with the electrolyte solutions increase in volume and also tend to increase the area of the separator of the cell. The increase in area at the ion cross-over point of the cell is problematic as it may cause ion shielding and a decrease in current efficiency voltage. The absolute flux of ions across the membrane is proportional to the area of the membrane. An increase in area of the electrolyte membrane can result in a decreased ion shielding efficiency (i.e. more ions can cross over to the other half cell through the membrane). This can have a detrimental impact on the lifetime and efficiency of the battery. A decrease in the current efficiency of the battery implies that more energy will be required to charge the battery compared to the energy output that can be achieved out of the battery.

WO2020/023057 A1 describes composite membranes having a microporous polymer structure, and an ion exchange material forming a continuous ionomer phase within the composite membrane. The continuous ionomer phase refers to absence of any internal interfaces in a layer of ionomer or between any number of layers coatings of the ion exchange material provided on top of one another. The composite membrane exhibits a haze change of 0% or less after being subjected to a blister test procedure. No bubbles or blisters are formed on the composite membrane after the blister test procedure. A haze value of the composite membrane is between 5% and 95%, between 10% and 90% or between 20% and 85%. The composite membrane may have a thickness of more than 17 microns at 0% relative humidity.

EP2800194 A1 describes a redox flow secondary battery having an electrolyte tank containing: a positive electrode cell chamber containing a positive electrode comprising a carbon electrode; a negative electrode cell chamber containing a negative electrode comprising a carbon electrode; and an electrolyte membrane as a barrier membrane that separates/isolates the positive electrode cell chamber and the negative electrode cell chamber. The positive electrode cell chamber contains a positive electrode electrolyte containing an active substance, the negative electrode cell chamber contains a negative electrode electrolyte containing an active substance, and the redox flow secondary battery charges and discharges on the basis of the change in valency of the active substances in the electrolytes. The electrolyte membrane contains an ion exchange resin composition that is primarily a polyelectrolyte polymer, and the electrolyte membrane has a reinforcing material comprising a fluorine-based porous membrane.

Therefore, there is a need for electrolyte membranes with low dimensional change upon hydration i.e. low swelling properties, in particular with low swelling properties in the machine and transverse directions of the membrane, which provide good battery efficiencies and present no blisters upon assembly of the electrolyte membranes in battery cells.

**Summary**

The invention relates to a composite electrolyte membrane as defined according to appended claims 1 to 12.

There is provided a composite electrolyte membrane, the composite electrolyte membrane comprising:

a) a single porous layer comprising a microporous polymer structure; and
b) an ion exchange material at least partially embedded within the microporous polymer structure and rendering the microporous polymer structure occlusive,
c) wherein the composite electrolyte membrane has a modulus of elasticity in a first axial direction and in a second axial direction of the composite electrolyte membrane at least about 450 MPa at 50% relative humidity, when measured according to the tensile strength test described herein;
d) wherein the porous layer has an elastic strength in the first axial direction and in the second axial direction of the porous layer of at least 30 N/m when measured according to the tensile strength test described herein;

wherein the absolute ratio of the elastic strength of the at least one porous layer in the first axial direction and in the second axial direction of the porous layer is from 0.45 to 2.20;
wherein the composite electrolyte membrane has a total content of microporous polymer structure (mass per unit area) from 30 g·m$^{-2}$ to 80 g·m$^{-2}$ based on the total area of the composite electrolyte membrane.

The absolute ratio of modulus of elasticity of the composite electrolyte membrane in the first axial direction and the second axial direction of the composite electrolyte membrane is from 0.45 to 2.20, or from about 0.45 to about 2.10, or from about 0.80 to about 1.20, or from about 0.80 to about 1.00, or from about 0.80 to about 0.90, or from about 0.70 to about 1.30, or from about 0.60 to about 1.80, or from about 0.90 to about 1.20, or from about 1.00 to about 1.20, or from about 1.10 to about 1.20.

For the avoidance of doubt, properties of the at least one porous layer comprising a polymer comprising a microporous polymer structure refer to the properties of the porous layer *per se*, before it is treated or laminated in the composite electrolyte membrane. That is, properties of the at least one porous layer are measured on the at least one porous layer in its original state (i.e. untreated, or without any ion exchange material embedded therein). Properties of the composite electrolyte membrane refer to properties measured on the finished laminate comprising at least one porous layer comprising a microporous polymer structure and an ion exchange material at least partially embedded within the microporous polymer structure and rendering the microporous polymer structure occlusive.

Within the context of this disclosure, the first axial direction of the composite electrolyte membrane (e.g. Machine Direction, MD) is aligned with the first axial direction of the porous layer and the second axial direction of the composite electrolyte membrane (e.g. Transverse Direction, TD) is aligned with the second axial direction of the porous layer.

The absolute ratio of the elastic strength of the at least one porous layer in the first axial direction and the second axial direction of the porous layer may be from about 0.40 to about 2.20, or from about 0.45 to about 2.10, or from about 0.80 to about 1.20, or from about 0.80 to about 1.00, or from about 0.80 to about 0.90, or from about 0.70 to about 1.30, or from about 0.60 to about 1.80, or from about 0.90 to about 1.20, or from about 1.00 to about 1.20, or from about 1.10 to about 1.20.

The composite electrolyte membrane may have an ultimate tensile strength in the first axial direction of the composite electrolyte membrane of at least about 55 MPa when measured according to the tensile strength test described herein at 50 % relative humidity and 25 °C. The composite electrolyte membrane may have an ultimate tensile strength in the first axial direction of the composite electrolyte membrane when measured according to the tensile strength test described herein at 50 % relative humidity and 25 °C of from about 55 MPa to about 90 MPa, or from about 55 MPa to about 80 MPa, or from 55 MPa to about 70 MPa, of from about 55 MPa to about 60 MPa, or from about 60 MPa to about 90 MPa, or from about 60 MPa, to about 80 MPa, or from about 80 MPa to about 70 MPa. The composite electrolyte membrane may have an ultimate tensile strength in the first axial direction of the composite electrolyte membrane when measured according to the tensile strength test described herein at 50 % relative humidity and 25 °C of about 55 MPa, or about 58 MPa, or about 59 MPa, or about 60 MPa, or about 61 MPa, or about 62 MPa, or about 65 MPa.

The composite electrolyte membrane may have an ultimate tensile strength in the second axial direction of the composite electrolyte membrane of at least about 60 MPa when measured according to the tensile strength test described herein at 50 % relative humidity and 25 °C. The composite electrolyte membrane may have an ultimate tensile strength in the second axial direction of the composite electrolyte membrane when measured according to the tensile strength test described herein at 50 % relative humidity and 25 °C of from about 60 MPa to about 120 MPa, or from about 60 MPa to about 100 MPa, or from 60 MPa to about 80 MPa, of from about 60 MPa to about 70 MPa, or from about 65 MPa to about 90 MPa, or from about 70 MPa to about 100 MPa, or from about 80 MPa to about 120 MPa. The composite electrolyte membrane may have an ultimate tensile strength in the second axial direction of the composite electrolyte membrane when measured according to the tensile strength test described herein at 50 % relative humidity and 25 °C of about 60 MPa, or about 62 MPa, or about 64 MPa, or about 65 MPa, or about 66 MPa, or about 68 MPa, or about 70 MPa.

Within the context of this disclosure, the total porous layer ultimate web tensile strength may be the sum of the ultimate tensile strength of all the porous layers present in the composite electrolyte membranes. In embodiments in which there is only one porous layer, the total porous layer ultimate web tensile strength corresponds to the ultimate tensile strength of the single porous layer present in the membrane. In embodiments in which there are two or more porous layers in the composite electrolyte membrane, the total porous layer ultimate web tensile strength may be the sum of ultimate web tensile strengths of all the porous membranes present in the composite electrolyte membrane.

The total porous layer ultimate web tensile strength in the first axial direction of the porous layer may be of at least about 800 N/m, when measured according to the tensile strength test described herein. The total porous layer ultimate web tensile strength in the first axial direction of the porous layer when measured according to the tensile strength test described herein may be of from about 800 N/m to about 2000 N/m, or from about 1000 N/m to about 2000 N/m, from about 1500 N/m to about 2000 N/m, from about 1200 N/m to about 1500 N/m, from about 1500 N/m to about 2000 N/m. The total porous layer ultimate web tensile strength in the first axial direction of the porous layer when measured according to the tensile strength test described herein may be of about 1000 N/m, or about 1200 N/m, or about 1300 N/m, or about 1400 N/m, or about 1500 N/m, or about 1600 N/m, or about 1800 N/m, or about 2000 N/m.

The total porous layer ultimate tensile strength in the second axial direction of the porous layer may be of at least about 800 N/m, when measured according to the tensile strength test described herein. The total porous layer ultimate tensile strength in the second axial direction of the porous layer when measured according to the tensile strength test described herein may be of from about 800 N/m to about 3000 N/m, or from 1000 N/m to about 3000 N/m, or from about 1200 N/m to about 3000 N/m, or from about 1500 N/m to about 3000 N/m, or from about 1100 N/m to about 1500 N/m, or from about 1500 N/m to about 2000 N/m, or from about 1500 N/m to about 3000 N/m, or from about 2000 N/m to about 3000 N/m, or from about 2000 N/m to about 2500 N/m, or from about 2500 N/m to about 3000 N/m. The total porous layer ultimate tensile strength in the second axial direction of the porous layer when measured according to the tensile strength test described herein may be of about 800 N/m, or about 900 N/m, or about 1000 N/m, or about 1100 N/m, or about 1200 N/m, or about 1300 N/m, or about 1400 N/m, or about 1500 N/m, or about 2000 N/m, or about 2500 N/m, or about 3000 N/m.

Within the context of this disclosure, the total porous layer elastic strength may be the sum of the elastic strength of all the porous layers present in the composite electrolyte membranes. In embodiments in which there is only one porous layer, the total porous layer elastic strength corresponds to the elastic strength of the single porous layer present in the membrane. In embodiments in which there are two or more porous layers in the composite electrolyte membrane, the total porous layer elastic strength may be the sum of elastic strengths of all the porous membranes present in the composite electrolyte membrane.

The total porous layer elastic strength in the first axial direction of the porous layer may be of at least about 30 N/m, when measured according to the tensile strength test described herein. The total porous layer elastic strength in the first axial direction of the porous layer when measured according to the tensile strength test described herein may be of from about 30 N/m to about 400 N/m, or from about 40 N/m to about 300 N/m, from about 45 N/m to about 250 N/m, from about 40 N/m to about 80 N/m, from about 80 N/m to about 250 N/m. The total porous layer elastic strength in the first axial direction of the porous layer when measured according to the tensile strength test described herein may be of about 40 N/m, or about 60 N/m, or about 80 N/m, or about 100 N/m, or about 150 N/m, or about 200 N/m, or about 250 N/m, or about 300 N/m.

The total porous layer elastic strength in the second axial direction of the porous layer may be of at least about 30 N/m, when measured according to the tensile strength test described herein. The total porous layer elastic strength in the first axial direction of the porous layer when measured according to the tensile strength test described herein may be of from about 30 N/m to about 400 N/m, or from about 40 N/m to about 300 N/m, from about 45 N/m to about 250 N/m, from about 40 N/m to about 80 N/m, from about 80 N/m to about 250 N/m. The total porous layer elastic strength in the first axial direction of the porous layer when measured according to the tensile strength test described herein may be of about 40 N/m, or about 60 N/m, or about 80 N/m, or about 100 N/m, or about 150 N/m, or about 200 N/m, or about 250 N/m, or about 300 N/m.

The swelling ratio of the composite electrolyte membrane in the first direction of the composite electrolyte membrane may be up to about 8 %, or up to about 7%, or up to about 6%, or up to about 5% when measured in the swelling test described herein at about 100 % relative humidity at about 100 °C. The swelling ratio of the composite electrolyte membrane in the first direction of the composite electrolyte membrane may be from about 0.1 % to about 8 %, or from about 1 % to about 8 %, or from about 2 % to about 8 %, or from about 3 % to about 8 % , or from about 5 % to about 8 %, or from about 7 %, to about 8 %, or from about 0.1 % to about 5 %, or from about 1 % to about 4 %, or from about 0.1 % to about 3.5 %, or from about 1 % to about 3 % when measured in the swelling test described herein at 100 % relative humidity at about 100 °C. The swelling ratio of the composite electrolyte membrane in the first direction of the composite electrolyte membrane may be about 1 %, or about 2%, or about 3%, or about 4%, or about 5%, or about 5.2 %, or about 6%, or about 7%, or about 8 % when measured in the swelling test described herein at 100 % relative humidity at about 100 °C.

The swelling ratio of the composite electrolyte membrane in the second direction of the composite electrolyte membrane may be up to about 8 %, or up to 7%, or up to about 6 %, or up to about 5 % when measured in the swelling test described herein at 100 % relative humidity at about 100 °C. The swelling ratio of the composite electrolyte membrane in the second direction of the composite electrolyte membrane may be from about 0.1 % to about 8 %, or from about 1 % to about 8 %, or from about 2 % to about 8 %, or from about 3 % to about 8 % , or from about 5 % to about 8 %, or from about 7% to about 8%, or from about 0.1 % to about 5 %, or from about 1 % to about 4 %, or from about 0.1 % to about 3.5 %, or from about 1 % to about 3 % when measured in the swelling test described herein at 100 % relative humidity at about 100 °C. The swelling ratio of the composite electrolyte membrane in the second direction of the composite electrolyte membrane may be about 1 %, or about 2%, or about 3%, or about 4%, or about 5%, or about 6%, or about 7%, or about 8% when measured in the swelling test described herein at 100 % relative humidity at about 100 °C.

The microporous polymer structure of the porous layer comprises a fluorinated polymer. The fluorinated polymer may be selected from the group comprising: polytetrafluoroethylene (PTFE), poly(ethylene-co-tetrafluoroethylene) (EPTFE), expanded polytetrafluoroethylene (ePTFE), polyvinylidene fluoride (PVDF), expanded polyvinylidene fluoride (ePVDF), expanded poly(ethylene-co-tetrafluoroethylene) (eEPTFE) or mixtures thereof. According to the invention, the microporous polymer structure comprises expanded polytetrafluoroethylene (ePTFE). The fluorinated polymer may be perfluorinated expanded polytetrafluoroethylene (ePTFE).

Within the context of this disclosure, the total content of the microporous polymer structure within the composite membrane may be presented in terms of total mass of the microporous polymer structure in the composite membrane per the total area of the composite membrane ($g/m^2$). The composite membrane may comprise one or more types of microporous polymer structures. For example, the composite membrane may comprise a single type of microporous polymer structure (e.g. ePTFE) present in at least two reinforcing layers. The composite membrane may comprise at least two reinforcing layers, and each reinforcing layer may comprise a mixture of different types of microporous polymer structures (e.g. fluorinated polymers and hydrocarbon polymers). The composite membrane may comprise at least two reinforcing layers and a first of the at least two reinforcing layers may comprise a single type of microporous polymer structure (e.g. ePTFE) and a second of the at least two reinforcing layers may comprise a single type of microporous polymer structure different from the microporous polymer structure of the first of the at least two reinforcing layers (e.g. hydrocarbon polymer).

In embodiments in which the microporous polymer structure of the porous layer comprises ePTFE, the composite electrolyte membrane may have a total content of microporous polymer structure (mass per unit area) of at least about 5.5 $g \cdot m^{-2}$. In embodiments in which the microporous polymer structure of the porous layer comprises ePTFE, the composite electrolyte membrane has a total content of microporous polymer structure (mass per unit area) from about 30 $g \cdot m^{-2}$ to about 80 $g \cdot m^{-2}$, or from about 30 $g \cdot m^{-2}$ to about 70 $g \cdot m^{-2}$, or from about 30 $g \cdot m^{-2}$ to about 60 $g \cdot m^{-2}$, or from about 30 $g \cdot m^{-2}$ to about 50 $g \cdot m^{-2}$, or from about 30 $g \cdot m^{-2}$ to about 40 $g \cdot m^{-2}$, or from about 30 $g \cdot m^{-2}$ to about 35 $g \cdot m^{-2}$, or from about 40 $g \cdot m^{-2}$ to about 50 $g.m^{-2}$, based on the total area of the composite electrolyte membrane. The composite electrolyte membrane may have a total content of microporous polymer structure of about 30 $g \cdot m^{-2}$, or about 31 $g \cdot m^{-2}$, or about 32 $g \cdot m^{-2}$, or about 34 $g \cdot m^{-2}$, or about 35 $g \cdot m^{-2}$, or about 40 $g \cdot m^{-2}$, or about 50 $g \cdot m^{-2}$, or about 60 $g \cdot m^{-2}$, or about 70 $g \cdot m^{-2}$, or about 80 $g \cdot m^{-2}$, based on the total area of the composite electrolyte membrane.

The microporous polymer structure of the porous layer may comprise a hydrocarbon polymer. The hydrocarbon polymer may comprise polyethylene, polypropylene, polycarbonate, polystyrene, or mixtures thereof.

The composite electrolyte membrane may have a total content of microporous polymer structure from about 15 vol % to about 70 vol %, or from about 20 vol % to about 50 vol %, or from about 35 to about 70%, or from about 35 vol % to about 50 vol %, or from about 35 vol % to about 45 vol %, or from about 40 vol % to about 45 vol %, or from about 40 vol % to about 50 vol % based on the total volume of the composite electrolyte membrane. The composite electrolyte membrane may have a total content of microporous polymer structure of about 20 vol %, or about 36 vol %, or about 38 vol %, or about 40 vol %, or about 42 vol %, or about 44 vol %, or about 46 vol %, or about 48 vol %, or about 50 vol % based on the total volume of the composite electrolyte membrane.

The composite electrolyte membrane may have a thickness from about 10 $\mu$m to about 115 $\mu$m, or from about 10 $\mu$m to about 100 $\mu$m, or from about 10 $\mu$m to about 90 $\mu$m, or from about 10 $\mu$m to about 80 $\mu$m, or from about 10 $\mu$m to about 75 $\mu$m, or from about 10 $\mu$m to about 70 $\mu$m, or from about 10 $\mu$m to about 60 $\mu$m, or from about 10 $\mu$m to about 50 $\mu$m, or from about 10 $\mu$m to about 40 $\mu$m, or from about 10 $\mu$m to about 30 $\mu$m, or from about 10 $\mu$m to about 20 $\mu$m, or from about 10 $\mu$m to about 15 $\mu$m, or from about 10 $\mu$m to about 12 $\mu$m, or from about 20 $\mu$m to about 60 $\mu$m, or from about 30 $\mu$m

to about 60 μm, or from about 40 μm to about 60 μm, or from about 12 μm to about 30 μm, or from about 12 μm to about 20 μm, or from about 15 μm to about 30 μm, or from about 15 μm to about 20 μm, from about 20 μm to about 30 μm, or from about 15 μm to about 90 μm, when measured at 50 % relative humidity at 25°C in the thickness measurement test described herein. The composite membrane may have a thickness of about 10 μm, or about 11 μm, or about 12, or about 13 μm, or about 14 μm, or about 15 μm, or about 16 μm, or about 17 μm, or about 18 μm, or about 19 μm, or about 20 μm, or about 21 μm, or about 22 μm, or about 23 μm, or about 24 μm, or about 25 μm, or about 30 μm, or about 35 μm, or about 40 μm, or about 45 μm, or about 50 μm, or about 55 μm, or about 60 μm, or about 65 μm, or about 70 μm, or about 75 μm, or about 80 μm, or about 85 μm, or about 90 μm, or about 95 μm, or about 100 μm, or about 105 μm, or about 110 μm, or about 115 μm when measured at 50 % relative humidity at 25°C in the thickness measurement test described herein.

The porous layer may have a thickness of at least about 0.1 μm when measured at 50 % relative humidity at 25°C in the thickness measurement test described herein. The at least one porous layer may have a thickness from about 0.1 μm to about 230 μm, or from about 12 μm to about 230 μm, or from about 20 μm to about 230 μm, or from about 40 μm to about 230 μm, or from about 60 μm to about 230 μm, or from about 80 μm to about 230 μm, or from about 100 μm to about 230 μm, or from about 120 μm to about 230 μm, or from about 140 μm to about 230 μm, or from about 160 μm to about 230 μm, or from about 180 μm to about 230 μm, or from about 200 μm to about 230 μm, or from about 210 μm to about 230 μm, or from about 220 μm to about 230 μm, or from about 12 μm to about 200 μm, or from about 12 μm to about 150 μm, or from about 12 μm to about 100 μm, or from about 12 μm to about 50 μm, or from about 14 μm to about 90 μm, when measured at 50 % relative humidity at 25°C in the thickness measurement test described herein. The at least one porous layer may have a thickness of about 14 μm, or about 20 μm, or about 25 μm, or about 50 μm, or about 55 μm, or about 60 μm, or about 70 μm, or about 75 μm, or about 80 μm, or about 85 μm, or about 90 μm, or about 120 μm, or about 150 μm, or about 200 μm, or about 230 μm when measured at 50 % relative humidity at 25°C in the thickness measurement test described herein.

The porous layer may have a first surface and a second surface. An ion exchange material may form a layer on at least one of the first surface and/or the second surface of the at least one porous layer. The ion exchange material may form a layer on both the first surface and the second surface of the at least one porous layer. In embodiments in which the ion exchange material forms a layer on both the first surface and the second surface of the at least one porous layer, the ion exchange material of the layer of ion exchange material formed on the first surface of the at least one porous layer may be different from the ion exchange material of the layer of ion exchange material formed on the second surface of the at least one porous layer. Alternatively, in embodiments in which the ion exchange material forms a layer on both the first surface and the second surface of the at least one porous layer, the ion exchange material of the layer of ion exchange material formed on the first surface of the at least one porous layer may be the same as the ion exchange material of the layer of ion exchange material formed on the second surface of the at least one porous layer. Alternatively, in embodiments in which the ion exchange material forms a layer on only the first or the second surface of the at least one porous layer comprising a microporous polymer structure, the other of the first surface or the second surface of the at least one porous layer is non-occluded.

The ion exchange material may comprise at least one ionomer. The ion exchange material may comprise at least two ionomers. The at least one ionomer may comprise a proton conducting polymer. The proton conducting material may be perfluorinated or hydrocarbon-based. Suitable hydrocarbon proton conducting materials include, for example, styrenic ion exchange polymers, fluorostyrenic ion exchange polymers, polyarylether ketone ion exchange polymers, polysulfone ion exchange polymers, bis(fluoroalkylsulfonyl)imides, (fluoroalkylsulfonyl)(fluorosulfonyl)imides, polyvinyl alcohol, polyethylene oxides. The suitable perfluorinate proton conducting polymer may comprise perfluorosulfonic acid polymers, perfluorocarboxylic acid polymers, perfluorophosphonic acid polymers,. The at least one ionomer may have a density not lower than about 1.9 g/cc at 0% relative humidity at 25°C. The at least one ionomer may have a total equivalent weight (EW) from about 500 g/eq to about 2000 g/eq, or about 500 g/eq to about 1000 g/eq, or about 500 g/eq to about 800 g/eq, or about 700 g/eq to about 1500 g/eq, or about 1000 g/eq to about 2000 g/eq, or about 1500 g/eq to about 2000 g/eq. The ion exchange material may have an equivalent weight of about 500 g/eq, or about 600 g/eq, or about 700 g/eq, or about 800 g/eq, or about 850 g/eq, or about 900 g/eq, or about 1000 g/eq, or about 1200 g/eq, or about 1400 g/eq, or about 1600 g/eq, or about 1800 g/eq.

The composite electrolyte membrane may have a modulus of elasticity in a first axial direction of the composite electrolyte membrane of from about 300 MPa to about 2000 MPa, or from about 300 MPa to about 600 MPa, or from about 300 MPa, to about 1500 MPa, or from about 300 MPa to about 1000 MPa, or from about 600 MPa to about 1500 MPa, or from about 600 MPa to about 1000 MPa, or from about 600 MPa to about 800 MPa, or from about 800 MPa to about 900 MPa, or from about 700 MPa to about 800 MPa, from about 1000 MPa to about 2000 MPa, or from about 1500 MPa to about 2000 MPa, at about 100 % relative humidity (e.g. 95% relative humidity). The modulus of elasticity is determined based on tensile strength measurements according to the tensile strength test described herein.

The composite electrolyte membrane may have a modulus of elasticity in a second axial direction of the composite electrolyte membrane of from about 300 MPa to about 2000 MPa, or from about 300 MPa to about 600 MPa, or from about 300 MPa, to about 1500 MPa, or from about 300 MPa to about 1000 MPa, or from about 600 MPa to about 1500 MPa, or from about 600 MPa to about 1000 MPa, or from about 600 MPa to about 800 MPa, or from about 800 MPa to about 900 MPa, or from about 1000 MPa to about 2000 MPa, or from about 1500 MPa to about 2000 MPa, at about 100 % relative humidity (e.g. 95% relative humidity). The modulus of elasticity is determined based on tensile strength measurements according to the tensile strength test described herein.

The composite electrolyte membrane may have a modulus of elasticity in a first axial direction of the composite electrolyte membrane of from about 450 MPa to about 2300 MPa, or from about 300 MPa to about 600 MPa, or from about 300 MPa, to about 1500 MPa, or from about 300 MPa to about 1000 MPa, or from about 600 MPa to about 1500 MPa, or from about 600 MPa to about 1000 MPa, or from about 600 MPa to about 800 MPa, or from about 800 MPa to about 900 MPa, or from about 700 MPa to about 800 MPa, from about 1000 MPa to about 2000 MPa, or from about 1500 MPa to about 2000 MPa, or from about 2000 MPa to about 2300 MPa, at 50 % relative humidity. The modulus of elasticity is determined based on tensile strength measurements according to the tensile strength test described herein.

The composite electrolyte membrane may have a modulus of elasticity in a second axial direction of the composite electrolyte membrane of from about 450 MPa to about 2300 MPa, or from about 300 MPa to about 600 MPa, or from about 300 MPa, to about 1500 MPa, or from about 300 MPa to about 1000 MPa, or from about 600 MPa to about 1500 MPa, or from about 600 MPa to about 1000 MPa, or from about 600 MPa to about 800 MPa, or from about 800 MPa to about 900 MPa, or from about 700 MPa to about 800 MPa, from about 1000 MPa to about 2000 MPa, or from about 1500 MPa to about 2000 MPa, or from about 2000 MPa to about 2300 MPa, at 50 % relative humidity. The modulus of elasticity is determined based on tensile strength measurements according to the tensile strength test described herein.

The composite electrolyte membrane may preferentially swell in a third axial direction of the composite electrolyte membrane. The composite electrolyte membrane may have a swelling in a third axial direction of the composite electrolyte membrane when measured according to the swelling test described herein at about 100 % relative humidity (e.g. 95% RH) and at 100°C from about 5 % to about 150 %, or from about 5 % to about 100 %, or from about 10 % to about 100 %, or from about 10% to about 90%, or from about 10% to about 80%, or from about 20% to about 80%, or from about 50% to about 80%, or from about 30% to about 50 %, or from about 40% to about 80%, or from about 30% to about 90%, or from about 50% to about 80%, or from about 50% to about 90%.

The composite electrolyte membrane may further comprise at least one support layer attached to one or more external surfaces of the composite electrolyte membrane.

The composite electrolyte membrane may be a redox flow battery composite electrolyte membrane. The composite electrolyte membrane may be a fuel cell composite electrolyte membrane. The composite electrolyte membrane may be an electrolyzer composite electrolyte membrane.

In another aspect, there is provided a composite electrolyte membrane-electrode assembly for an electrochemical device, comprising:

   a) at least one electrode; and
   b) a composite electrolyte membrane as described herein in contact with the at least one electrode.

The composite electrolyte membrane may be attached to the at least one electrode. The composite electrolyte membrane may have a first surface and a second surface, and the electrode may be a first electrode layer attached to the first surface of the composite electrolyte membrane. The membrane electrode assembly may further comprise a second electrode layer attached to the second surface of the composite electrolyte membrane.

The electrode or one or both of the first or second electrode layers may be a porous layer. The electrode or one or both of the first or second electrode layers may be selected from a felt, a paper or a woven material.

The at least one electrode may comprise carbon fibers. The at least one electrode may comprise doped carbon fibers. The carbon fibers may have a diameter from about 5 to about 30 $\mu$m.

The at least one electrode may be selected from Pt/Co/Pd /doped graphene/MoSx (Cathode); $RuO_2$ /$IrO_2$/Ir and Ru bimetallic oxides, Ir/Pt bimetallic oxides, Ti, Sn, Ta, Nb, Sb, Pb, Mn Oxides mixed with Ir or Ru Oxides.

The electrode may comprise a catalyst support selected from carbon (e.g. Carbon Black /CNTs), or carbon nanoparticles doped with N,P,S or B).

The composite electrolyte membrane-electrode assembly may be a redox flow battery membrane-electrode assembly comprising:

   a) at least one electrode; and
   b) a composite electrolyte membrane as described herein,

wherein the at least one electrode is in contact with the composite electrolyte membrane.

The composite electrolyte membrane-electrode assembly may be an electrolyzer membrane-electrode assembly comprising:

   a) at least one electrode; and

b) a composite electrolyte membrane as described herein,

wherein the at least one electrode is in contact with the composite electrolyte membrane.

The composite electrolyte membrane electrode-assembly may further comprise a fluid (i.e. gas or liquid) diffusion layer. The fluid diffusion layer may be selected from a felt, a paper or a woven material, a carbon/carbon-based diffusion layer, titanium porous sintered powder mesh/plates/ Fibers/ Felts, a stainless steel mesh, or mixtures thereof.

The electrolyzer composite electrolyte membrane-electrode assembly may comprise a first electrode and a second electrode. The first electrode may form an anode and the second electrode may form a cathode.

The electrolyzer composite electrolyte membrane-electrode assembly may comprise:

a first and a second electrode layer;
the composite electrolyte membrane as described herein, wherein each of the first and second electrode layers is disposed on an opposite surface of the composite electrolyte membrane, and a fluid diffusion layer disposed on the first and second electrode layers.

The first and second electrode layers may be a first and second electrode catalyst layers. The first and second electrode catalyst layers may be adhered to the composite electrolyte membrane.

In another aspect, there is provided a redox flow battery comprising the composite electrolyte membrane described herein, or a composite electrolyte membrane-electrode assembly described herein.

The redox flow battery may comprise a composite electrolyte membrane-electrode assembly described herein disposed between two bipolar plates. The membrane electrode assembly and the bipolar plates may be held together by a frame.

Also described is a redox flow battery stack comprising:

a) a first end plate;
b) a first current collector plate;
c) a plurality of redox flow batteries as described herein connected in series;
d) a second current collector; and
e) a second end plate;

wherein the plurality of redox flow batteries are disposed between the first current collector plate and the second current collector plate, and
wherein the first end plate is disposed adjacent the first current collector plate and the second end plate is disposed adjacent the second collector plate. The redox flow battery stack may further comprise a housing.

Also described is an electrolyzer comprising the composite electrolyte membrane described herein, or an electrolyzer composite electrolyte membrane-electrode assembly described herein.

Also described is a method of manufacturing a composite electrolyte membrane as described herein, the method comprising:

a) providing a support layer for the composite electrolyte membrane;
b) disposing a layer of a first liquid ionomer composition on the support layer;
c) disposing a porous layer comprising a microporous polymer structure on the layer of the first liquid ionomer composition and allowing an ion exchange material of the first liquid ionomer composition to become at least partially embedded within the microporous polymer structure of the porous layer and rendering the microporous polymer structure occlusive, optionally applying pressure on the porous layer to laminate the composite electrolyte membrane; and
d) drying the composite to eliminate the liquid components.

The method may further comprise after step c) or d) the steps of:

e) disposing a layer of a second liquid ionomer composition on a surface of the support layer opposite a surface on which the first liquid ionomer composition; and
f) drying the composite to eliminate the liquid components.

When steps e) and f) are present, the drying step d) might be optional.

The method may comprise drying steps after disposing or coating each layer of liquid ionomer composition. In other embodiments, the method may comprise drying steps after disposing or coating some (but not each) layers of liquid ionomer composition. In other embodiments, the method does not comprise drying steps between the application of different layers of liquid ionomer composition but comprises only a final drying step in which the composite is dried to eliminate the liquid components. For the avoidance of doubt, in all embodiments, the method comprises a final drying step of drying the composite to eliminate the liquid components.

Also described is a method of manufacturing a composite electrolyte membrane as described herein, the method comprising:

a) providing a support layer for the composite electrolyte membrane;
b) disposing a layer of a first liquid ionomer composition on the support layer;
c) providing at least one porous layer comprising a microporous polymer structure and having a first surface and a second surface and disposing the first surface of the at least one porous layer on the layer of the first liquid ionomer composition;
d) disposing a layer of the first liquid ionomer composition on the second surface of the at least one porous layer to fully imbibe the microporous polymer structure and rendering the microporous polymer structure occlusive; and
e) drying the composite to eliminate the liquid components.

The step d) of disposing a second layer of the first liquid ionomer composition on the second surface of the at least one porous layer to fully imbibe the microporous polymer structure may be achieved by applying pressure (e.g. with a kiss roll) on the second surface of the at least one porous layer to draw first liquid ionomer composition all the way to the second surface. This may render the microporous polymer structure fully occlusive. Alternatively, or additionally, the step d) of disposing a second layer of the first liquid ionomer composition on the second surface of the at least one porous layer to fully imbibe the microporous polymer structure may be achieved by laying (by any suitable liquid layer deposition means) an additional layer of the first liquid ionomer composition on the second surface of the at least one porous layer. This may render the microporous polymer structure fully occlusive.

The method may further comprise the steps of:

f) disposing a layer of a second liquid ionomer composition on top of the layer of the first liquid ionomer composition on the second surface of the at least one porous layer; and
g) drying the composite to eliminate the liquid components.

Also described is a method of manufacturing a composite electrolyte membrane as described herein, the method comprising:

a) providing a support layer for the composite electrolyte membrane;
b) disposing a layer of a first liquid ionomer composition on the support layer;
c) providing a porous layer comprising a microporous polymer structure and having a first surface and a second surface;
d) disposing the first surface of the porous layer on the layer of the first liquid ionomer composition and allowing an ion exchange material of the first liquid ionomer composition to become at least partially embedded within the microporous polymer structure and rendering the microporous polymer structure occlusive;
e) disposing a layer of a second liquid ionomer composition on the second surface of the porous layer; and
f) drying the composite to eliminate the liquid components.

The first liquid ionomer composition may comprise one or more ion exchange materials. The first liquid ionomer composition may comprise a liquid carrier. The liquid carrier may consist of a single liquid carrier or a mixture of liquid carriers. The liquid carrier may be a solvent or a mixture of solvents. The first liquid ionomer composition may be a solution of one or more ion exchange materials in the liquid carrier. The first liquid ionomer composition may be a dispersion of one or more ion exchange materials in the liquid carrier.

The second liquid ionomer composition may comprise one or more ion exchange materials. The second liquid ionomer composition may comprise a liquid carrier. The liquid carrier may consist of a single liquid carrier or a mixture of liquid carriers. The liquid carrier may be a solvent or a mixture of solvents. The second liquid ionomer composition may be a solution of one or more ion exchange materials in the liquid carrier. The first liquid ionomer composition may be a dispersion of one or more ion exchange materials in the liquid carrier.

The first liquid ionomer composition may be the same as the second liquid ionomer composition. The first liquid ionomer composition may be different to the second liquid ionomer composition. The first liquid ionomer composition and the second liquid ionomer composition may comprise the same ion exchange material or materials. The first liquid ionomer composition may comprise a different ion exchange material or a different mixture of ion exchange materials as the second liquid ionomer composition. The first liquid ionomer composition and the second liquid ionomer composition may comprise the same liquid carrier or may comprise a different liquid carrier.

**Brief Description of the Figures**

Figure 1A shows a schematic representation of a composite electrolyte membrane according to an embodiment of the present disclosure.

Figure 1B shows a schematic representation of a composite electrolyte membrane according to another embodiment of the present disclosure.

Figure 2 shows a schematic representation of a composite electrolyte membrane-electrode assembly according to an embodiment of the present disclosure.

Figure 3A shows a schematic representation of a composite electrolyte membrane according to embodiments of the present disclosure before swelling.

Figure 3B shows a schematic representation of the composite electrolyte membrane of Figure 3A assembled with electrodes and a frame and comprising positioning bars for mounting the membrane-electrode assembly in a cell stack.

Figure 3C shows a schematic representation of a state of the art composite electrolyte membrane presenting undesirable (excessive) swelling.

Figure 4 shows a schematic representation of a redox flow battery system comprising a composite electrolyte membrane according to the present disclosure.

Figure 5 shows a schematic representation of a process for manufacturing a composite electrolyte membrane according to the present disclosure.

Figure 6 shows a schematic representation of an alternative process for manufacturing a composite electrolyte membrane according to the present disclosure.

Figure 7 shows a schematic representation of an alternative process for manufacturing a composite electrolyte membrane according to the present disclosure.

Figure 8 shows a schematic representation of the Machine Direction (MD) and the Transverse Direction (TD) of a specimen (e.g. a composite electrolyte membrane or a porous layer as described herein).

Figure 9 shows Table 1, which presents the properties of the composite membranes.

Figure 10 shows Figure 2, which presents the properties of the porous layers comprising a microporous structure before they are employed in the composite electrolyte membranes of the examples presented in Table 1.

**Detailed Description**

The inventors have surprisingly discovered that the composite electrolyte membranes of the present disclosure present low dimensional change upon hydration i.e. low swelling properties, in particular with low swelling properties in the machine and transverse directions of the membrane. This is advantageous, particularly in redox flow battery applications, because these membranes provide good battery efficiencies and present no blisters upon assembly of the electrolyte membranes in battery cells. Advantageously, the composite electrolyte membranes of the present disclosure can be assembled in redox flow battery cells using the dry assembly method without presenting significant swelling in the machine and the transverse directions after assembly. This significantly reduces the manufacturing costs without compromising the durability and efficiency of the battery.

The inventors found particularly surprising that composite electrolyte membranes according to the present disclosure comprising one porous layer comprising a microporous polymer structure also present the advantageous low swelling properties discussed above. Without wishing to be bound by theory, composite electrolyte membranes according to the present disclosure having high modulus (e.g. a modulus of elasticity in MD at least about 450 MPa at 50% relative humidity and greater than about 300 MPa at about 100 % relative humidity in MD and TD (e.g. in a first direction and in a second direction of the composite electrolyte membrane) and at least one porous layer comprising a microporous polymer structure and having an absolute ratio of elastic strength in MD and TD from about 0.45 to about 2.20 may achieve the surprisingly low swelling ratios (e.g. up to 8% in MD and up to 7 % in TD). Furthermore, the inventors found it surprising that composite electrolyte membranes with one or more porous layers comprising a microporous polymer structure having a high elastic strength (e.g. at least 30 N/m) in both the machine and transverse directions of the composite electrolyte membranes (MD and TD) present low swelling ratios in the machine and transverse directions (e.g. up to 8% in MD and up to 8 % in TD).

The low swelling membranes of the present disclosure also presented low or minimal crossover of the active species. Without wishing to be bound by theory, this may be achieved by proving at least one porous layer comprising a microporous polymer structure. It was surprising that even a single porous layer, as claimed, comprising a microporous polymer structure was enough to provide the required low swelling properties to the membranes and low crossover.

Within the context of this disclosure, elastic strength is defined as the slope of strain in a material (e.g. a porous layer or a composite electrolyte membrane) generated by the applied stress multiplied by the thickness (force per unit width) of a sample in the elastic region of material response. The elastic strenght of a sample can be calculated by multiplying the modulus of elasticity, as evaluated by ASTM method D882-18 of August 2018 entitled Standard Test Method for Tensile Properties of Thin Plastic Sheeting, by the thickness of a sample. The total porous layer elastic strength is the sum of the elastic strength of all the porous layers that are present in the composite electrolyte membrane.

Within the context of this disclosure, ultimate tensile strength (or tensile strength before break) means the maximum stress that a material can withstand while being stretched or pulled before breaking as evaluated by ASTM method D882-18 of August 2018 entitled Standard Test Method for Tensile Properties of Thin Plastic Sheeting. The ultimate tensile strength indicates maximum tensile stress according to the stress-strain curve. Ultimate tensile strength for the composite electrolyte membrane means the relative tensile strength of the composite electrolyte membrane normalized by thickness and expressed in force per unit area, (MPa). Ultimate web tensile strength for the at least one porous layer means the absolute tensile strength of the porous layer not normalized by thickness and expressed in N/m. The total porous layer ultimate web tensile strength is the sum of the ultimate web tensile strength of all the porous layers that are present in the composite electrolyte membrane.

Within the context of this disclosure, modulus of elasticity is defined as slope of strain in material (e.g. composite electrolyte membrane) generated by certain applied stress in elastic region of material response per ASTM D882-18 of August 2018 entitled Standard Test Method for Tensile Properties of Thin Plastic Sheeting. The modulus of elasticity is obtained from the tensile strength test described herein. Modulus of elasticity is expressed in force per unit area, usually megapascals (MPa).

Without wishing to be bound by theory, the absolute ratio of the modulus of elasticity of the composite electrolyte membrane in a first and a second axial direction of the composite electrolyte membrane may match the absolute ratio of the elastic strength of the composite electrolyte membrane in a first and a second axial direction of the composite electrolyte membrane. The absolute ratio of the modulus of elasticity of the at least one porous layer in a first and a second axial direction of the composite electrolyte membrane may match the absolute ratio of the elastic strength of at least one porous layer in a first and a second axial direction of the composite electrolyte membrane.

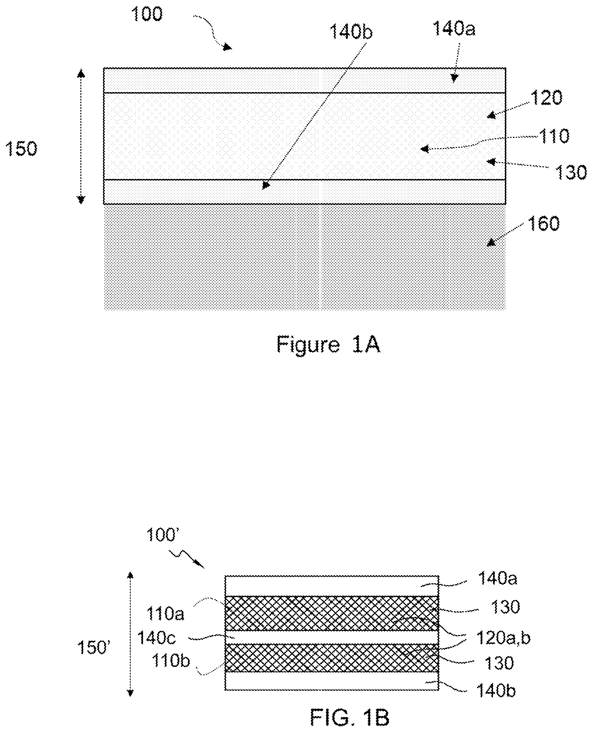

Figure 1A shows a composite electrolyte membrane 100 according to an embodiment of the disclosure. In this embodiment, the composite electrolyte membrane has a support or backer layer 160. The composite electrolyte membrane comprises a porous layer 110 comprising a microporous polymer structure 120 and an ion exchange material 130 at least partially embedded within the microporous polymer structure 120 and rendering the microporous polymer structure 120 occlusive. In the embodiment of Figure 1 the ion exchange material 130 is fully embedded within the microporous polymer structure 120. The porous layer 110 comprises a microporous polymer structure 120 comprising a fluoropolymer. For example, the porous layer 110 comprises ePTFE. However, the porous layer 110 may comprise any microporous polymer structure 120 as described herein above.

The composite electrolyte membrane 100 has a first layer of ion exchange material 140a and a second layer of ion exchange material 140b. The first and second layer of ion exchanged material may be unreinforced by the porous layer. The composite electrolyte membrane is a laminate. The composite electrolyte membrane has a thickness 150.

Figure 1B shows another composite electrolyte membrane 100' not according to the claims. The composite electrolyte membrane comprises two porous layers 110a and 110b comprising a microporous polymer structure 120a and 120b respectively and an ion exchange material 130 at least partially embedded within the microporous polymer structures 120a,b and rendering the microporous polymer structures 120a,b occlusive. In the embodiment of Figure 1B the ion exchange material 130 is fully embedded within the microporous polymer structures 120a,b. The porous layers 110a,b may comprise a microporous polymer structure 120a,b comprising a fluoropolymer. For example, the porous layers 110a,b may comprise ePTFE.

The composite electrolyte membrane 100' has a first layer of ion exchange material 140a disposed on an outer surface of the porous layer 110a, and a second layer of ion exchange material 140b disposed on an outer surface of the porous layer 110b. The composite electrolyte membrane 100' comprises a third layer of ion exchange material 140c between the porous layers 110a and 110 b. The first, second, and third layers of ion exchange material may be layers of unreinforced ion exchange material (i.e. the IEM is not reinforced by the porous layer, or substantially not imbibed in the porous layer). The composite electrolyte membrane 100' is a laminate. The composite electrolyte membrane 100' has a thickness 150'.

The composite electrolyte membrane may have a modulus of elasticity in a first axial direction of the composite electrolyte membrane greater than about 450 MPa at 50% relative humidity. The composite electrolyte membrane may have a modulus of elasticity in a second axial direction of the composite electrolyte membrane greater than about 450 MPa at 50% relative humidity. The porous layer 110 comprising a microporous polymer structure may have an elastic strength of at least about 30 N/m in the first axial direction (e.g. MD) and in the second axial direction (e.g. TD) of the porous layer 110. The absolute ratio of the elastic strength of the porous layer 110 in the first axial direction (MD) of the porous layer 110 and the elastic strength of the porous layer 110 in the second axial direction (TD) of the porous layer 110 may be from about 0.45 to about 2.20. The composite electrolyte membrane 100 may have a modulus of elasticity in a first axial direction (MD) of the composite electrolyte membrane 100 greater than 300 MPa at about 100 % relative humidity. The composite electrolyte membrane 100 may have a modulus of elasticity in a second axial direction (TD) of the composite electrolyte membrane 100 greater than 300 MPa at about 100 % relative humidity. The porous layer 110 may have an elastic strength of at least about 30 N/m in the first axial direction (e.g. MD) and in the second axial direction (e.g. TD) of the porous layer 110, when measured according to the tensile strength test described herein.

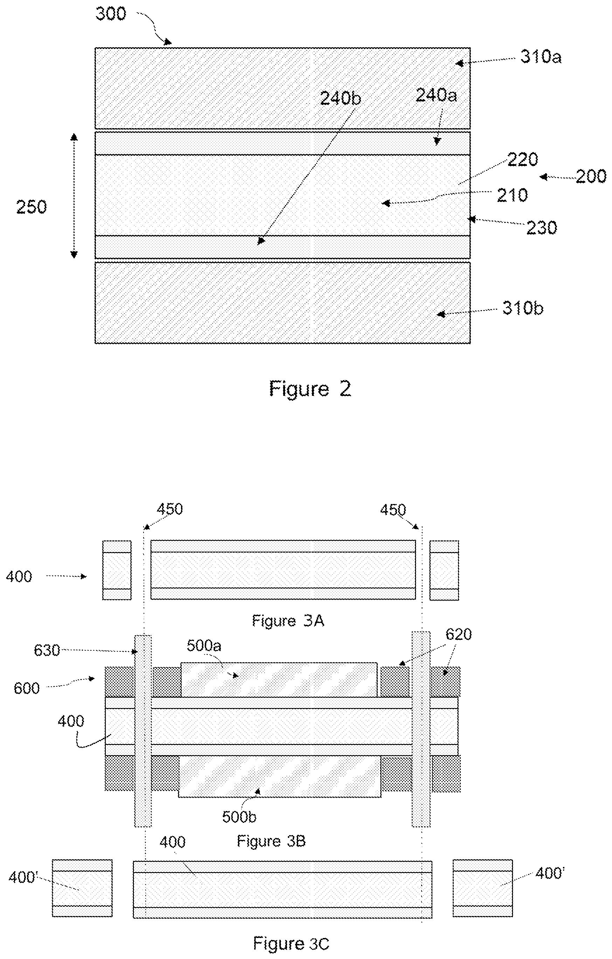

Figure 2 shows a composite electrolyte membrane-electrode assembly 300 according to an embodiment of the disclosure. The membrane-electrode assembly 300 comprises a composite electrolyte membrane 200 as described herein. The properties described for the composite electrolyte membrane 100 also apply to composite electrolyte membrane 200. Composite electrolyte membrane 200 comprises a first layer of ion exchange material 240a and a second layer of ion exchange material 240b disposed at either side of a porous layer 210. The porous layer 210 comprises a microporous polymer structure 220 and an ion exchange material 230 at least partially embedded within the microporous polymer structure 220 and rendering the microporous polymer structure 220 occlusive. The composite electrolyte membrane 200 has a thickness 250. The first and second layer of ion exchanged material may be unreinforced by the porous layer.

Compressed against the first layer of ion exchange material 240a is a first electrode 310a. Compressed against the second layer of ion exchange material 240b of the composite electrolyte membrane 200 is a second electrode 310b. One or both of the electrodes 310a and/or 310b may be a porous layer. One or both of the electrodes 310a and /or 310b may be selected from a felt, a paper or a woven material.

Figure 3A shows a schematic representation of a composite electrolyte membrane 400 according to embodiments of the present disclosure before swelling. The composite electrolyte membrane 400 may have any of the properties described above for composite electrolyte membranes 100 and 200. As shown in Figure 3A, composite electrolyte membrane 400 has perforations 450, each configured to receive a positioning bar. In Figure 3A the composite electrolyte membrane 400 is shown in its dry state (i.e. not swollen).

Figure 3B shows a schematic representation of a redox flow battery cell 600 comprising the composite electrolyte membrane 400 of Figure 3A assembled with electrodes 500a and 500b disposed at opposite sides of membrane 400, and a frame 620 and comprising positioning bars 630 for mounting the membrane-electrode assembly in a cell stack. Even after being in contact with water, the composite electrolyte membrane 400 does not present a substantial change in the machine direction and/or the transverse direction. Therefore, even if the composite electrolyte membrane 400 is assembled into the redox flow battery cell 600 using a dry approach, the redox flow battery cell 600 presents no blisters and the efficiency and lifetime of the cell is improved compared to state of the art composite electrolyte membranes.

Figure 3C shows a schematic representation of a state of the art composite electrolyte membrane 400' presenting undesirable (excessive) swelling after contact with water. As can be seen, in this prior art membrane swelling causes changes in dimension of the membrane 400' in the machine direction (MD) and transverse direction (TD), and therefore the positioning bars are no longer aligned with the perforations of the membrane 400'. If the membrane is assembled employing the dry approach, this change of dimensions of the membrane 400' after assembly and contact with a solution is detrimental because it can cause the membrane to sag over the frame to which the membrane 400' is attached around its perimeter, which may decrease the performance of the membrane in operation. Additionally, this change in dimensions upon swelling may result in damage to the membrane 400' (e.g. tears or cuts may appear on the membrane material at the interface with the frame).

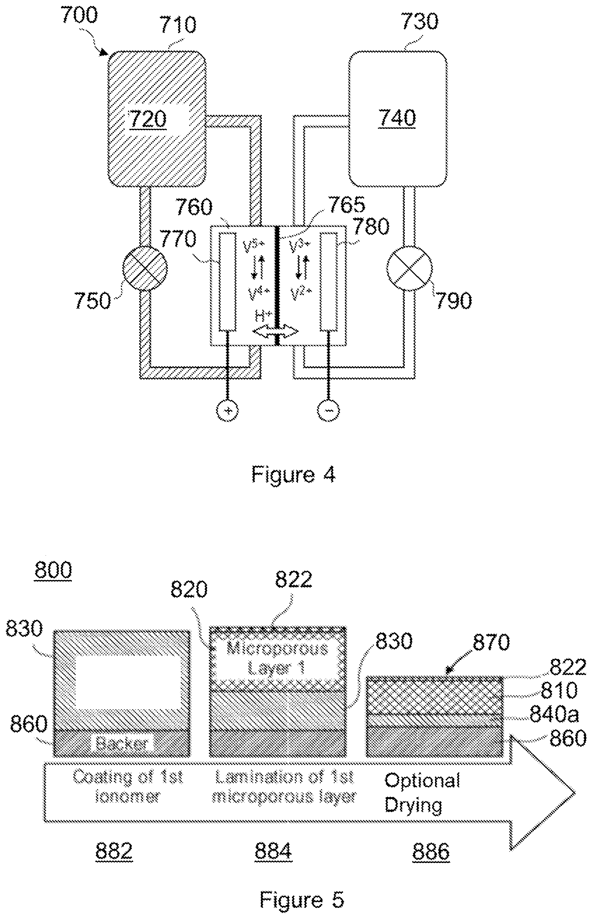

Figure 4 shows a schematic representation of a redox flow battery system comprising a composite electrolyte membrane according to the present disclosure. As shown in Figure 4, a flow battery 700 is provided in accordance with aspects of the present disclosure. Flow battery 700 is a fully rechargeable electrical energy storage device comprising a reservoir 710 including a catholyte or positive electrolyte fluid 720 and a second reservoir 730 including an anolyte or negative electrolyte fluid 740. The catholyte 720 may be an electrolyte containing specified redox ions which are in an oxidized state and are to be reduced during the discharge process of flow battery 700, or are in a reduced state and are to be oxidized during the charging process of the flow battery 700, or which are a mixture of these oxidized ions and ions to be oxidized. The anolyte 740 may be an electrolyte, containing redox ions which are in a reduced state and are to be oxidized during a discharge process of the flow battery 700, or are in an oxidized state and are to be reduced during the charging process of the flow battery 700, or which are a mixture of reduced ions and ions to be reduced.

The catholyte 720 is circulated via pump 750 through an exchange region 760 comprising a composite electrolyte membrane 765 according to the present disclosure positioned between a first electrode 770 and a second electrode 780. The anolyte 740 is circulated via pump 790 also through the exchange region 760. The composite electrolyte membrane 765 is manufactured in accordance with aspects of the present invention (see, e.g., Figures 5-7).

In some embodiments, the amount of the catholyte 720 and the anolyte 740 provided to the exchange region 760 may be varied depending on a pumping operation of the pumps 750 and 790, and accordingly, the amount of power generated by reaction of electrolytes in the exchange region 760 may be varied. Both the catholyte 720 and the anolyte 740 circulate in their own respective space promoting reduction/oxidation chemical processes on both sides of the composite electrolyte membrane 765 resulting in an electrical potential. Cell voltage may be chemically determined by the Nernst equation, and ranges from 0.5 to 5.0 volts or from 0.8 to 1.7 volts.

Referring to Figure 5, exemplary flow diagram of process 800 illustrates a method for forming a composite electrolyte membrane 870 having a porous layer 810 of a microporous polymer structure and ion exchange material 830 fully embedded within the microporous polymer structure, an additional layer of ion exchange material 840a and an uncoated non-occlusive layer 822. The process 800 incudes providing a support layer such as a backer 860.

Suitable support layers may comprise woven materials which may include, for example, scrims made of woven fibers of expanded porous polytetrafluoroethylene; webs made of extruded or oriented polypropylene or polypropylene netting, commercially available from Conwed, Inc. of Minneapolis, Minn.; and woven materials of polypropylene and polyester, from Tetko Inc., of Briarcliff Manor, N.Y. Suitable nonwoven materials may include, for example, a spun-bonded polypropylene from Reemay Inc. of Old Hickory, Tenn. The support structure can include web of polyethylene ("PE"), polystyrene ("PS"), cyclic olefin copolymer ("COC"), cyclic olefin polymer ("COP"), fluorinated ethylene propylene ("FEP"), perfluoroalkoxy alkanes ("PFAs"), ethylene tetrafluoroethylene ("ETFE"), polyvinylidene fluoride ("PVDF"), polyetherimide ("PEI"), polysulfone ("PSU"), polyethersulfone ("PES"), polyphenylene oxide ("PPO"), polyphenyl ether ("PPE"), polymethylpentene ("PMP"), polyethyleneterephthalate ("PET"), or polycarbonate ("PC"). The support structure may also include a protective layer, which can include polyethylene (PE), polystyrene ("PS"), cyclic olefin copolymer ("COC"), cyclic olefin polymer ("COP"), fluorinated ethylene propylene ("FEP"), perfluoroalkoxy alkanes ("PFAs"), ethylene tetrafluoroethylene ("ETFE"), polyvinylidene fluoride ("PVDF"), polyetherimide ("PEI"), polysulfone ("PSU"), polyethersulfone ("PES"), polyphenylene oxide ("PPO"), polyphenyl ether ("PPE"), polymethylpentene ("PMP"), polyethyleneterephthalate ("PET"), or polycarbonate ("PC").

Support layers may optionally include a reflective layer that includes a metal substrate (e.g., an aluminum substrate). The specific metal chosen may vary widely so long as it is reflective. A nonlimiting list of exemplary metals includes: aluminum, beryllium, cerium, chromium, copper, germanium, gold, hafnium, manganese, molybdenum, nickel, platinum, rhodium, silver, tantalum, titanium, tungsten, zinc, or alloys such as Inconel or bronze. The reflective layer optionally comprises a mixture or alloy of two or more metals, optionally two or more of the metals listed above. The reflective layer optionally can include a high reflectivity polymeric multilayer film such as Vikuiti™ Enhanced Specular Reflector available from 3M company. In yet another example, the reflective layer optionally can include a high reflectivity non-metal inorganic dielectric multilayer film comprised of materials such as, for example, magnesium fluoride, calcium fluoride, titanium dioxide, silicon dioxide.

At step 882 in Figure 5, an ion exchange material is applied as a layer 830 of controlled thickness to the support structure 860 in a single or multiple pass ionomer coating technique including forward roll coating, reverse roll coating, gravure coating, doctor coating, kiss coating, slot die coating, slide die coating, as well as dipping, brushing, painting, and spraying. The ion exchange material layer 830 may be prepared by dissolving an ion exchange material in a solvent. The ion exchange material layer 830 may be prepared by suspending an ion exchange material in a carrier. The ion exchange material may comprise ion exchange material and a solvent, and optionally additional components such as a surfactant. In some embodiments, the ion exchange material is a cation exchange material, an anion exchange material, or an ion exchange material containing both cation and anion exchange capabilities. The choice of solvent or carrier may depend, in part, on both the composition of the ionomer and the composition of the porous substrate.

At step 884 in Figure 5, one porous layer 820 comprising a microporous polymer structure is laminated over at least a portion of the ion exchange material layer 830 by any conventional technique, such as, for example, hot roll lamination, ultrasonic lamination, adhesive lamination, contact lamination or forced hot air lamination so long as the technique does not damage the integrity of the untreated microporous polymer structure. In some embodiments, the porous layer 820 comprises ePTFE having a microporous polymer structure. The porous layer 820 can be characterized by uniform structure and composition throughout its entire thickness. Alternatively, the structure and composition of the porous layer 820 can vary throughout its thickness. An imbibed porous layer 810 is formed when the porous layer 820 is at least partially imbibed with the ion exchange material layer 830.

At step 886 in Figure 5, the porous layer 810 comprising a microporous polymer structure and being at least partially imbibed with ion exchange material 830 is placed into an oven to dry and thermally anneal and finalize construction of a composite electrolyte membrane 870. If the method comprises the addition of further layers, the drying step may be omitted until all the layers are applied. The composite membrane may then be subjected to a final drying step. The oven temperature may be greater than 60° C, for example from 60° to 220° C or from 150° to 200° C. Drying and thermally annealing the treated microporous polymer structure in the oven causes the ion exchange material to become securely adhered to the internal membrane surfaces, and optionally the external membrane surfaces, e.g., the fibrils and/or nodes of the microporous polymer structure. The resulting dried and annealed composite electrolyte membrane 870 may have a thickness of from about 20 $\mu$m to about 40 $\mu$m when measured at 50 % relative humidity at 25°C in the thickness measurement test described herein. The composite electrolyte membrane 870 may have a modulus of elasticity in machine direction of the composite electrolyte membrane greater than about 450 MPa at 50% relative humidity, when measured according to the tensile strength test described herein. The composite electrolyte membrane 870 may have a modulus of elasticity in transverse direction of the composite electrolyte membrane greater than about 450 MPa at 50% relative humidity, when measured according to the tensile strength test described herein. The composite electrolyte membrane 870 may have a modulus of elasticity in machine direction of the composite electrolyte membrane of at least about 300 MPa at 100% relative humidity, when measured according to the tensile strength test described herein. The composite electrolyte membrane 870 may have a modulus of elasticity in transverse direction of the composite electrolyte membrane of at least about 300 MPa at 100% relative humidity, when measured according to the tensile strength test described herein. The at least one porous layer 820 comprising a microporous polymer structure may have an elastic strength of at least about 30 N/m in the machine and the transverse directions of the at least one porous layer 820, when measured according to the tensile strength test described herein. The absolute ratio of the elastic strength of the at least one porous layer 820 in the machine direction and the elastic strength of the at least one porous layer 820 in transverse direction is from about 0.45 to about 2.20. The absolute ratio of the modulus of elasticity of the at least one porous layer 820 in the machine direction and the modulus of elasticity of the at least one porous layer 820 in the transverse direction is from about 0.45 to about 2.20.

Although not shown in Figure 5, coating step 882 may be repeated on coating the composite membrane 870 (before or after drying step 886) with a further layer or layers of ion exchange material. The ion exchange material of the further layer or layers may be the same or different to that of ion exchange material layer 830. The composite membrane may be dried after each coating step, or it may be subjected to a single final drying step after all layers of ion exchange material have been deposited.

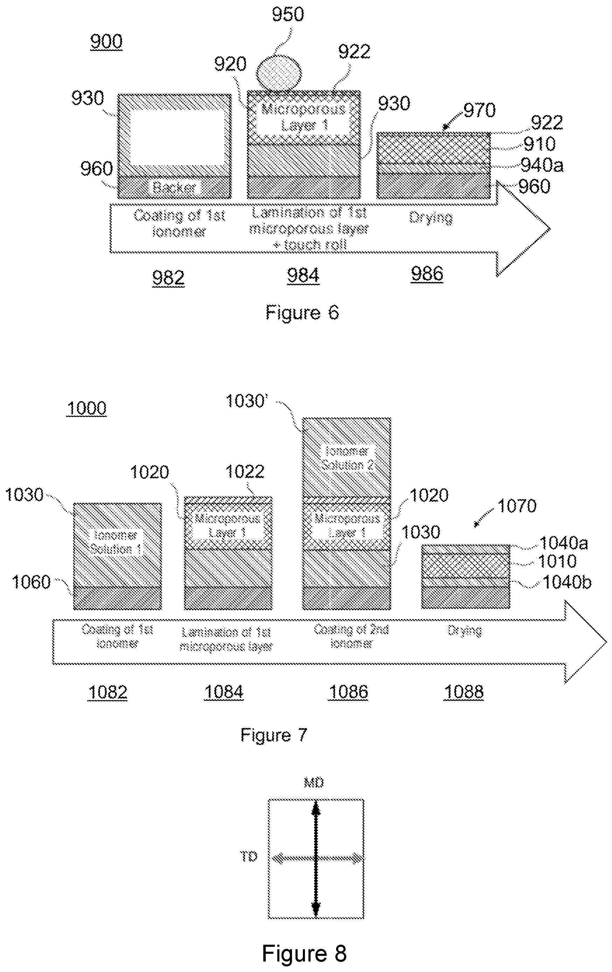

Referring now to Figure 6, exemplary flow diagram of process 900 illustrates a method for forming a composite electrolyte membrane 970 having a porous layer 910 comprising a microporous polymer structure at least partially embedded with ion exchange material 930, an additional layer of unreinforced ion exchange material 940a and a partially coated non-occlusive layer 922. The process 900 incudes providing a support layer (e.g. backer) 960, such as a woven material, similar to the process 800.

At step 982 of Figure 6, a ion exchange material is applied as a layer 930 of controlled thickness to the support layer 960 (backer) similar to step 882 of the process 800 in Figure 5. The description of step 982 is omitted here as it is identical to step 882 of the process 800, described above.

At step 984 of Figure 6, a porous layer 920 comprising a microporous polymer structure is laminated over a first portion of the layer 930 of ion exchange material by any conventional technique, such as, hot roll lamination, ultrasonic lamination, adhesive lamination, contact lamination or forced hot air lamination so long as the technique does not damage the integrity of the untreated microporous polymer structures. In some embodiments, the porous layer 920 comprises ePTFE having a microporous polymer structure. The microporous polymer structure can be characterized by uniform structure and composition throughout its entire thickness. Alternatively, the structure and composition of the microporous polymer structure can vary throughout its thickness.

After the lamination, a touch roll 950 may be used to coat a top portion of the porous layer 920 comprising a microporous polymer structure with, for example, ion exchange material (ionomer) coating (not shown). This may be applied as a separate layer, or ion exchange material may be drawn to the surface of the porous layer 920 by application of pressure on the porous layer with the touch roll 950.

Step 986 of Figure 6 is similar to step 886 of the process 800 in Figure 5. Accordingly, the description of step 986 is omitted here. The properties of the composite electrolyte membrane 970 may be as described hereinabove.

Although not shown in Figure 6, coating step 982 may be repeated on composite membrane 970 (before or after drying step 986) with a further layer or layers of ion exchange material. The ion exchange material may be the same or different to that of layer 930. The composite membrane may be dried after each coating step, or it may be subjected to a single final drying step as 986 after all layers of ion exchange material have been deposited.

Referring now to Figure 7, exemplary flow diagram of process 1000 illustrates a method for forming a composite electrolyte membrane 1070 having a layer 1010 comprising an ion exchange material at least partially embedded within a microporous polymer structure , and two additional layers of unreinforced ion exchange material 1040a and 1040b disposed at either side of the fully imbibed layer 1010 comprising a microporous polymer structure. The process 1000 incudes providing a support layer (e.g. backer) 1060, such as a woven material, similar to the processes 800 and 900.

At step 1082 of Figure 7, a first layer 1030 of ion exchange material is applied to the support layer (backer), the layer 1030 having a controlled thickness similar to step 882 of the process 800 in Figure 5. The description of step 1082 is omitted here as it is identical to step 882 of the process 800, described above.

At step 1084 in Figure 7, a porous layer 1020 comprising a microporous polymer structure is laminated over a first portion of the first layer 1030 of ion exchange material (ionomer solution 1) by any conventional technique, such as, hot roll lamination, ultrasonic lamination, adhesive lamination, contact lamination or forced hot air lamination so long as the technique does not damage the integrity of the microporous polymer structures of the layer 1020. The porous layer 1020 may comprise ePTFE having a microporous polymer structure of uniform structure and composition throughout its entire thickness. Alternatively, the structure and composition of the microporous polymer structure can vary throughout its thickness.

Step 1084 may be followed by an optional drying step (not shown) similar to step 1088. In some embodiments, there is no drying step after lamination of the porous layer 1020 in step 1084.

After the lamination (and optionally after the drying step), at step 1086, a second layer 1030' ion exchange material (ionomer solution 2) is applied as a layer of controlled thickness to the top side 1022 of the porous layer 1020 comprising a microporous polymer structure using ionomer coating technique including forward roll coating, reverse roll coating, gravure coating, doctor coating, kiss coating, slot die coating, slide die coating, as well as dipping, brushing, painting, and spraying. The first and the second ion exchange material may be prepared by dissolving an ion exchange material in a solvent. The first and the second ion exchange material may comprise ion exchange material and a solvent or carrier, and optionally additional components such as a surfactant. In some embodiments, the ion exchange material is a cation exchange material, an anion exchange material, or an ion exchange material containing both cation and anion exchange capabilities. The choice of solvent or carrier may depend, in part, on both the composition of the ionomer and the composition of the porous substrate.

Step 1088 is similar to step 886 of the process 800 in Figure 5. Accordingly, the description of step 1088 is omitted here. The dried and annealed prepared or obtained composite electrolyte membrane 1070 may have any of the properties described herein above.

Processes 800, 900 and 1000 may include optional steps of submerging the composite electrolyte membrane and boiling the composite electrolyte membrane. For example, in embodiments in which a surfactant is employed, the composite electrolyte membrane is further processed to remove the surfactant. This is accomplished by soaking or submerging the composite electrolyte membrane in a solution of, for example, water, isopropyl alcohol, hydrogen peroxide, methanol, and/or glycerin. During this step, the surfactant, which was originally mixed in solution with the ion exchange material, is removed. This soaking or submerging causes a slight swelling of the composite electrolyte membrane however the ion exchange material remains within the interior volume of the porous substrate.

As shown in Figures 5, 6 and 7, a composite electrolyte membrane 870, 970, 1070 includes at least one porous layer 820, 920, 1020 comprising a microporous polymer structure and an ion exchange material 830, 930, 1030 (e.g. ionomer) at least partially impregnated in the microporous polymer structure. The ion exchange material may substantially impregnate the microporous polymer structure of the porous layer 820, 920, 1020 so as to render the interior volume substantially occlusive (i.e. the interior volume having structures that is characterized by low volume of voids and being highly impermeable to gases). For example, by filling greater than 90% of the interior volume of the microporous polymer structure with the ion exchange material, substantial occlusion will occur, and membrane will be characterized by Gurley numbers larger than 10000 s. The ion exchange material is securely adhered to the internal and external surfaces of the microporous polymer structure of the porous layer 820, 920, 1020, e.g., the fibrils and/or nodes of the microporous polymer structure forming an imbibed layer 810, 910, 1010.

In some embodiments, the ion exchange material, in addition to being impregnated in the microporous polymer structure forming the imbibed layer 810, 910, 1010, is provided as one or more additional unreinforced layers 840a, 940a, 1040a, 1040b on one or more external surfaces of the imbibed layer 810, 910, 1010.

As illustrated in the composite electrolyte membrane 870 shown in Figure 5, part of the microporous polymer structure of the porous layer 820 (e.g. top surface area or bottom surface area) may include a non-occlusive (i.e. the interior volume having structures that is characterized by high volume of voids and being highly permeable to gases) layer 822 that is free or substantially free of the ion exchange material 830. The location of the non-occlusive layer 822 is not limited to the top surface area of the porous layer 820. As provided above, the non-occlusive layer 822 may be provided on a bottom surface area of the imbibed porous layer 810.

As illustrated in the composite electrolyte membrane 970 shown in Figure 6, the non-occlusive layer 922 may include a small amount of the ion exchange material present in an internal surface of the microporous polymer structure of the porous layer 920 as a thin node and fibril coating. However, the amount of the ion exchange material may be not be large enough to render the microporous polymer structure occlusive, thereby forming the non-occlusive layer 922.

In some embodiments, the composite electrolyte membrane 870, 970, 1070 may be provided on a support layer 860, 960, 1060. The support layer 860, 960, 1060 may include a backer, a release film such as, for example, cycloolefin copolymer (COC) layer. In some embodiments, the composite electrolyte membrane 870, 970, 1070 may be released (or otherwise uncoupled) from the support layer 860, 960, 1060 prior to being incorporated in a membrane electrode assembly (MEA).

Figures 5 to 7 illustrate exemplary composite electrolyte membranes 870, 970, 1070 that include a single type of ion exchange material. However, the application is not limited to composite electrolyte membranes having a single type of ion exchange material or a single imbibed layer 810, 910, 1010.

Figure 8 shows a schematic representation of the machine direction (MD) and the transverse direction (TD) in a sample. Without wishing to be bound by theory, the machine direction may correspond to the Y axis of a sample, the transverse direction may correspond to the X axis of a sample, and the thickness of the sample may correspond to the Z axis of said sample.

## Test Procedures and Measurement Protocols used in Examples

### Thickness

Samples were prepared and characterized in a clean room with a degree of cleanliness class 10000 at 23°C±2°C and at a relative humidity of 50±10 %. Test materials were cut into circles of 48 mm diameter using a punch press. The samples were equilibrated in the room in which the thickness was measured for at least 1 hour prior to measurement. A thickness gauge (DE12BR (Sony Precision Technology) with a flat type stylus phi 6.5mm) was brought into contact with each sample and the height reading of the gauge was recorded in three different spots on the membrane. The measuring pressure was 0.7+/-0.2N and the minimum scale was 1/10000mm. The relative humidity was measured using an RH probe "HN-C" (obtained from CHINO Corporation, Japan). For the avoidance of doubt, the thickness of the composite electrolyte membrane is measured on the complete laminate comprising at least one porous layer comprising a microporous polymer structure and an ion exchange material at least partially embedded within the microporous polymer structure and rendering the microporous polymer structure occlusive. The thickness of the porous layers were performed on untreated porous layers (i.e. porous layers in their original state, without any ion exchange material embedded therein).

The thickness of composite electrolyte membrane at 0% RH was calculated using the following general formula:

$$
\begin{aligned}
Thickness\ at\ 0\%\ RH &= \\
&= \left( \frac{Thickness\ at\ room\ RH - \dfrac{M/A_{porous\ layer}}{Density_{porous\ layer}}}{1 + \dfrac{\lambda_{room\ RH}}{EW_{ionomer\_average}} * \dfrac{Molecular\ weight_{water}}{Density_{water}} * Density_{ionomer}} \right) * \\
&\quad * \left( 1 + \frac{\lambda_{RH=0\%}}{EW_{ionomer\_average}} * \frac{Molecular\ weight_{water}}{Density_{water}} * Density_{ionomer} \right) + \frac{M/A_{porous\ layer}}{Density_{porous\ layer}} = \\
&= [\ micron\ ]
\end{aligned}
$$

where the parameter corresponds to the water uptake of the ion exchange material in terms of moles of water per mole of acid group at a specified RH. For PFSA ionomer, the values for $\lambda$ at any RH in the range from 0 to 100% in gas phase were calculated according the following formula:

$$
\lambda = 80.239 \times RH^6 - 38.717 \times RH^5 - 164.451 \times RH^4 + 208.509 \times RH^3
$$

$$
- 91.052 \times RH^2 + 21.740 \times RH^1 + 0.084
$$

### Volume content of Microporous Polymer Structure (MPS) of composite electrolyte membrane

The volume % of the Microporous Polymer Structure in each Composite electrolyte membrane was calculated according to the following formula:

$$
\% Vol_{MPS} = \frac{\left( \dfrac{M/A_{porous\ layers}}{Matrix\ skeletal\ density_{MPM}} \right)}{Composite\ Membrane\ thickness\ at\ 0\%\ RH} = [\ \% \ ]
$$

The Microporous Polymer Structures used in these examples were ePTFE. The matrix skeletal density of ePTFE was taken to be 2.25 g/cm$^3$.

<u>Tensile Strength of composite electrolyte membrane</u>

Tensile strength measurements of composite electrolyte membranes were performed in accordance with ASTM D822-18 with a Tensilon RTG-1250 (company A&D, Japan having 80 mm length distance between grips. The specimens were tested at a test speed of 200 mm/min with a load cell of 50 N. All specimens were measured at constant temperature and humidity conditions, at 23°C±2°C and at relative humidity of 50±10 %. It is also possible to measure the tensile strength at different temperatures and relative humidity's, for example at a relative humidity of about 95%. The relative humidity of about 95% is achieved in using an RH climate chamber for the measurement of the tensile strength. Materials were cut along their machine direction (MD) or their transverse direction (TD) using a punch press. Each specimen was gripped ensuring that the specimen was not wrinkled. The initial strength applied was 0.08N and it was gradually increased until the specimen broke. The criterion for toe compensation was 0.08 N.

The ultimate tensile strength corresponds to the maximum tensile strength before the specimen breaks. In other words, the ultimate tensile strength is the maximum stress that a material can withstand while being stretched or pulled before breaking. The ultimate tensile strength of the composite membrane is measured in MPa.

<u>Modulus of elasticity of the composite membrane</u>

Within the context of this disclosure, modulus of elasticity is defined as slope of strain in material (e.g. composite electrolyte membrane) generated by certain applied stress in elastic region of material response per ASTM D882-18 of August 2018 entitled Standard Test Method for Tensile Properties of Thin Plastic Sheeting. The modulus of elasticity is obtained from the tensile strength test described herein. Modulus of elasticity is expressed in force per unit area, usually megapascals (MPa).

The elastic strength of the composite membrane is determined for each respective direction of sample, machine (MD) and transverse (TD) from the following formula:

**3% elastic strength (N/m): Tensile strength (N/m) when I is 3%**

$$I = (L-L_0)/L_0 \times 100$$

I = engineering strain (yield point elongation), %
L = length between grips when yield happens, mm
$L_0$ =Original length between grips, mm

In the range of 0.01-2% strain, the software of the Tensilon RTG-1250 collects multiple raw data points and calculates the differences between pairs of two adjacent data points. The software then selects the second, third and fourth largest changes. Finally, the software calculates the elastic strength by fitting a line in the least squares method from the three data points for each respective direction of sample, machine direction (MD) and transverse direction (TD).

The modulus of elasticity is then calculated by dividing the 3% elastic strength by the thickness of the sample for each respective direction of sample, machine (MD) and transverse (TD), as measured by a pressure gauge in the thickness test described herein. Therefore, the elastic strength is related to the elastic modulus, but it is not normalized to the thickness of the specimen.

The absolute ratio of the modulus of elasticity of the composite electrolyte is calculated by the formula:

modulus of elasticity of the composite in the first axial direction (MD) ÷ modulus of elasticity of the composite in the second axial direction (TD).

<u>Tensile Strength and Elastic Strength of the at least one Porous Layer Comprising a Microporous Polymer Structure</u>

Tensile strength tests of the at least one porous layer comprising a microporous polymer structure were performed with a 100N tensile tester (Tensilon RTG-1250 (company A&D, Japan) at a test speed of 200 mm/min. Tensile strength tests were performed on untreated porous layers (i.e. on porous layers in their original state, without any ion exchange material embedded therein). The specimens were cut in dog bone shapes and gripped such that there was a length of 80 mm between grips. Tests were performed at constant temperature and humidity at 23 ± 2 °C and 50%±5% relative humidity. Materials were cut along the machine direction and the transverse direction using a punch press.

Specimens were then gripped to prevent crinkling and strain was applied starting at 0.03 N and increased progressively until the specimen broke. The criterion for toe compensation was 0.03 N. The ultimate web tensile strength of the at least one porous layer corresponds to the maximum force before the porous layer specimen breaks normalized to sample width. The ultimate web tensile strength of the at least one porous layer is not normalized to the thickness of the porous layer and it is measured in N/m. Therefore, the ultimate web tensile strength characterizes the absolute strength of the at least one porous layer or the ultimate web tensile strength of the at least one porous layer.

The elastic strength of the at least one porous layer comprising a microporous polymer structure is determined for each respective direction of sample, machine (MD) and transverse (TD) from the following formula:

**3% elastic strength (N/m): Tensile strength (N/m) when I is 3%**

$$I = (L-L_0)/L_0 \times 100$$

I = engineering strain (yield point elongation), %
L = length between grips when yield happens, mm
$L_0$ = Original length between grips, mm

In the range of 0.01-2% strain, the software of the Tensilon RTG-1250 collects multiple raw data points and calculates the differences between pairs of two adjacent data points. The software then selects the second, third and fourth largest changes. Finally, the software calculates the elastic strength by fitting a line in the least squares method from the three data points for each respective direction of sample, machine direction (MD) and transverse direction (TD).

The absolute ratio of the elastic strength of the at least one porous layer is calculated as follows:

elastic strength of the porous layer in the first axial direction (MD) ÷ elastic strength of the porous layer in the second axial direction (TD)

The Total Elastic Strength of multiple porous layers used in a composite membrane is calculated by adding together the elastic strength of each individual porous layer present in the composite membrane in each respective direction of the sample, (i.e. machine direction (MD) and transverse direction (TD)).

The total porous layer ultimate web tensile strength of multiple porous layers used in a composite membrane is calculated by adding together the ultimate web tensile strength (in N/m) of each individual porous layer present in the composite membrane in each respective direction of sample, machine (MD) and transverse (TD).

Equivalent Weight (EW)

The equivalent weight of ionomer was calculated with an automatic potentiometric titrator: AT-610 employing sealed cell unit (SCU-118) from Kyoto Electronics Manufacturing Co., Ltd. Measurements were performed on three specimen sheets of 50 x 50 mm at 23°C±2°C. Specimens were dried at 100°C for 2 to 3 hours in a vacuum oven. The dry weight of the specimens was measured. Specimens were placed in 25 ml of distilled water inside the sealed cell unit, the cell unit was degassed and filled with nitrogen and the cell was stirred for 15 minutes. Then 55 ml of a 3M NaCl solution were added, and the sealed cell was stirred for further 45 minutes. A 0.01 M NaOH solution was titrated up to pH 7.00. The EW was calculated from the titer (in ml), the concentration of NaOH and the membrane weight using the following formula:

$$EW = \frac{(1000 \cdot membrane\ weight\ (g))}{[NaOH](M) \cdot titerNaOH\ (ml)}\ (g/eq)$$

Swelling Ratio of composite electrolyte membranes

The swelling ratio was measured employing a dimension tester NEXIV VMR-3020 (Nikon) on 50x60 mm rectangles drawn by the assigned pen. The dry dimensions in the machine direction (MD) and the transverse direction (TD) of each specimen were measured on a glass plate. The composite electrolyte membrane specimen was then placed into boiling, distilled water for 10 minutes, and was then transferred to distilled water at 23°C±2°C. Finally, the specimen was transferred to a glass plate and the dimensions in the machine direction and the transverse direction of the swollen specimen (wet) were measured. The swelling ratio was calculated using the following formula:

$$\text{Swelling ratio} = \frac{(Dimensions\ of\ wet\ specimen - Dimensions\ of\ dry\ specimen)}{Dimensions\ of\ dry\ specimen} \cdot 100$$

Mass-per-area

Each Microporous Polymer structure and composite electrolyte membrane was strained sufficient to eliminate wrinkles, and then a 18 cm$^2$ piece with 48 mm diameter was cut out using a die. The 18 cm$^2$ piece was weighed on a conventional laboratory scale. The mass-per-area (M/A) was then calculated as the ratio of the measured mass to the known area. This procedure was repeated 2 times and the average value of the M/A was calculated.

**Examples**

The composite membranes, apparatuses and methods of production of the present disclosure may be better understood by referring to the following non-limiting examples.

**Inventive Example 1**

A 37 micron (37 $\mu$m) thick composite electrolyte membrane comprised of ion exchange polymer perfluoro sulfonic acid resin with EW of 920 g/eq. reinforced with one layer of expanded porous ePTFE membrane 1 (see details of ePTFE in Membrane 1 in Table 2) was prepared using conventional laboratory technique. Initially, a water-ethanol based solution of perfluoro sulfonic acid resin with EW = 920 g/eq (obtained from obtained from Asahi Glass Company, Japan) with solids concentration of 18% was coated onto a moving substrate layer using a roll transfer method targeting nominal wet coating thickness of 370 micron, and laminated with ePTFE membrane #1. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 130° C for 3 minutes. The air side of the dried membrane was then coated by the same perfluoro sulfonic acid resin with solids concentration of 8% using the roll transfer method targeting nominal wet coating thickness of 120 micron and dried in an oven at 130° C for 1.5 minutes. The dried membrane was finally annealed by 190° C for 3 minutes. The resulting composite electrolyte membrane comprised the substrate layer coupled to an ion exchange polymer layer followed by microporous polytetrafluoroethylene membrane layer with the ion exchange polymer embedded within and had total thickness of 37 micron and mass/area of 75 g/m$^2$ at 50% RH.

**Example 2**

A 34 micron thick composite electrolyte membrane comprised of ion exchange polymer perfluoro sulfonic acid resin with EW of 920 g/eq reinforced with one layer of expanded porous ePTFE membrane #2 was prepared using conventional laboratory technique. Initially, a water-ethanol based solution of perfluoro sulfonic acid resin with EW= 920 g/eq (obtained from obtained from Asahi Glass Company, Japan) with solids concentration of 21% was coated onto a moving substrate layer using a roll transfer method targeting nominal wet coating thickness of 290 micron, and laminated with ePTFE membrane #2. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 130° C for 0.8 minutes. The air side of the dried membrane was then coated by the same perfluoro sulfonic acid resin with solids concentration of 16% using the roll transfer method targeting nominal wet coating thickness of 85 micron and dried in an oven at 160° C for 0.8 minutes. The dried membrane was finally annealed by 190° C for 3 minutes. The resulting composite electrolyte membrane comprised the substrate layer coupled to an ion exchange polymer layer followed by microporous polytetrafluoroethylene membrane layer with the ion exchange polymer embedded within and had total thickness of 34 micron and mass/area of 69 g/m$^2$ at 50%RH.

**Inventive Example 3**

A 29 micron thick composite electrolyte membrane comprised of ion exchange polymer perfluoro sulfonic acid resin with EW of 920 g/eq reinforced with one layer of expanded porous ePTFE membrane #3 was prepared using conventional laboratory technique. Initially, a water-ethanol based solution of perfluoro sulfonic acid resin with EW = 920g/eq (obtained from obtained from Asahi Glass Company, Japan) with solids concentration of 22% was coated onto a moving substrate layer using a roll transfer method targeting nominal wet coating thickness of 200 micron, and laminated with ePTFE membrane #3. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 3 minutes producing a solid coated structure comprising the substrate layer coupled to a polymer layer reinforced with expanded porous polytetrafluoroethylene. The resulting composite electrolyte membrane comprised the substrate layer coupled to an ion exchange polymer layer followed by microporous polytetrafluoroethylene membrane layer with the ion exchange polymer embedded within and had total thickness of 29 micron and mass/area of 58 g/m$^2$ at 50%RH. The resulting composite electrolyte membrane was characterized by having ion exchange material that is embedded within the microporous polymer structure leaving a non-occlusive portion of the microporous polymer structure closest to the first surface and having a layer of ion exchange material with thickness less than 1 micron on the second surface of the microporous polymer structure.

**Inventive Example 4**

A 30 micron thick composite electrolyte membrane comprised of ion exchange polymer perfluoro sulfonic acid resin with EW of 810 g/eq reinforced with one layer of expanded porous ePTFE membrane #4 was prepared using conventional laboratory technique. Initially, a water-ethanol based solution of perfluoro sulfonic acid resin with EW = 810g/eq (obtained from obtained from Asahi Glass Company, Japan) with solids concentration of 23% was coated onto a moving substrate layer using a roll transfer method targeting nominal wet coating thickness of 200 micron, and laminated with ePTFE membrane #4. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 3 minutes producing a solid coated structure comprising the carrier substrate coupled to a polymer layer reinforced with expanded porous polytetrafluoroethylene. The resulting composite electrolyte membrane comprised the substrate layer coupled to an ion exchange polymer layer followed by microporous polytetrafluoroethylene membrane layer with the ion exchange polymer embedded within and had total thickness of 30 micron and mass/area of 61 g/m$^2$ at 50%RH. The resulting composite electrolyte membrane was characterized by having ion exchange material that is embedded within the microporous polymer structure leaving a non-occlusive portion of the microporous polymer structure closest to the first surface and having a layer of ion exchange material with thickness less than 1 micron on the second surface of the microporous polymer structure.

**Inventive Example 5**

A 29 micron thick composite electrolyte membrane comprised of ion exchange polymer perfluoro sulfonic acid resin with EW of 920 g/eq reinforced with one layer of expanded porous ePTFE membrane #1 was prepared using conventional laboratory technique. Initially, a water-ethanol based solution of perfluoro sulfonic acid resin with EW = 920 g/eq (obtained from obtained from Asahi Glass Company, Japan) with solids concentration of 23% was coated onto a moving substrate layer using a roll transfer method targeting nominal wet coating thickness of 200 micron, and laminated with ePTFE membrane #1. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 3 minutes producing a solid coated structure comprising the substrate layer coupled to a polymer layer reinforced with expanded porous polytetrafluoroethylene. The resulting composite electrolyte membrane comprised the substrate layer coupled to an ion exchange polymer layer followed by microporous polytetrafluoroethylene membrane layer with the ion exchange polymer embedded within and had total thickness of 29 micron and mass/area of 59 g/m$^2$ at 50%RH. The resulting composite electrolyte membrane was characterized by having ion exchange material that is embedded within the microporous polymer structure leaving a non-occlusive portion of the microporous polymer structure closest to the first surface and having a layer of ion exchange material with thickness less than 1 micron on the second surface of the microporous polymer structure.

**Inventive Example 6**

A 25 micron thick composite electrolyte membrane comprised of ion exchange polymer perfluoro sulfonic acid resin with EW of 810 g/eq reinforced with one layer of expanded porous ePTFE membrane #1 was prepared using conventional laboratory technique. Initially, a water-ethanol based solution of perfluoro sulfonic acid resin with EW = 810g/eq (obtained from obtained from Asahi Glass Company, Japan) with solids concentration of 23% was coated onto a moving substrate layer using a roll transfer method targeting nominal wet coating thickness of 160 micron, and laminated with ePTFE membrane #1. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 3 minutes producing a solid coated structure comprising the substrate layer coupled to a polymer layer reinforced with expanded porous polytetrafluoroethylene. The resulting composite electrolyte membrane comprised the substrate layer coupled to an ion exchange polymer layer followed by microporous polytetrafluoroethylene membrane layer with the ion exchange polymer embedded within and had total thickness of 25 micron and mass/area of 52 g/m$^2$ at 50%RH. The resulting composite electrolyte membrane was characterized by having ion exchange material that is embedded within the microporous polymer structure leaving a non-occlusive portion of the microporous polymer structure closest to the first surface and having a layer of ion exchange material with thickness less than 1 micron on the second surface of the microporous polymer structure.

**Example 7**

A 17 micron thick composite electrolyte membrane comprised of ion exchange polymer perfluoro sulfonic acid resin with EW of 720 g/eq reinforced with two layers of expanded porous ePTFE membrane #5 was prepared using conventional laboratory technique. Initially, a water-ethanol based solution of perfluoro sulfonic acid resin with EW = 720g/eq (obtained from obtained from Asahi Glass Company, Japan) with solids concentration of 11% was coated onto a moving substrate layer using a slot die method targeting nominal wet coating thickness of 90 micron, and laminated with ePTFE membrane #5. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 1 minute producing a solid coated structure comprising the substrate layer coupled to a polymer layer reinforced with expanded porous polytetrafluoroethylene. The air side of the dried membrane was then coated by the same perfluoro sulfonic acid resin with solids concentration of 11% using the slot die method targeting nominal wet coating thickness of 90 micron, and laminated with ePTFE membrane #5 and dried in an oven at 160° C for 1 minute. The dried membrane was finally annealed by 190° C for 3 minutes. The air side of the dried membrane was then coated by the same perfluoro sulfonic acid resin with solids concentration of 4.5% using the slot die method targeting nominal wet coating thickness of 65 micron and dried in an oven at 160° C for 1 minute. The resulting composite electrolyte membrane comprised the substrate layer coupled to an ion exchange polymer layer followed by microporous polytetrafluoroethylene membrane layer with the ion exchange polymer embedded within followed by an ion exchange polymer layer followed by microporous polytetrafluoroethylene membrane layer with the ion exchange polymer embedded within followed by -an ion exchange layer. The resulting composite membrane had a total thickness of 17 micron and mass/area of 29.5 g/m$^2$ at 50%RH.

**Example 8**

A 85 micron thick composite electrolyte membrane comprised of ion exchange polymer perfluoro sulfonic acid resin with EW of 720 g/eq reinforced with three layers of expanded porous ePTFE membrane #6 was prepared using conventional laboratory technique. Initially, a water-ethanol based solution of perfluoro sulfonic acid resin with EW = 720g/eq (obtained from obtained from Asahi Glass Company, Japan) with solids concentration of 17% was coated onto substrate layer using a drawdown bar coating method targeting nominal wet coating thickness of 200 micron, and laminated with ePTFE membrane #6. The coating was accomplished using a drawdown bar with gap of 5 mil. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 125° C and annealed at that temperature for 1 minute producing a solid coated structure comprising the substrate layer coupled to a polymer layer reinforced with expanded porous polytetrafluoroethylene. The air side of the dried first intermediate membrane was then coated by the same perfluoro sulfonic acid resin with solids concentration of 17% using drawdown bar method targeting nominal wet coating thickness of 200 micron using drawdown bar with gap of 12.5 mil, and laminated with ePTFE membrane #6 and dried in an oven at 125° C for 1 minute. The air side of the dried second intermediate membrane was then coated by the same perfluoro sulfonic acid resin with solids concentration of 17% using drawdown bar method targeting nominal wet coating thickness of 200 micron using drawdown bar with gap of 12.5 mil, and laminated with ePTFE membrane #6 and dried in an oven at 125° C for 1 minute. The air side of the dried third intermediate membrane was then coated by the same perfluoro sulfonic acid resin with solids concentration of 17% using drawdown bar method targeting nominal wet coating thickness of 105 micron using drawdown bar with gap of 6.5 mil, and dried in an oven at 125° C for 1 minute. The dried membrane was finally annealed by 165° C for 3 minutes. The resulting composite electrolyte membrane comprised the substrate layer coupled to an ion exchange polymer layer followed by microporous polytetrafluoroethylene membrane layer with the ion exchange polymer embedded within followed by an ion exchange polymer layer followed by microporous polytetrafluoroethylene membrane layer with the ion exchange polymer embedded within followed by an ion exchange layer followed by microporous polytetrafluoroethylene membrane layer with the ion exchange polymer embedded within followed by an ion exchange layer and had total thickness of 85 micron and mass/area of 165 g/m$^2$ at 50%RH.

**Comparative Example 1**

Comparative example 1 is a commercially available electrolyte membrane Nafion™ NR212 casted without reinforcement (i.e. without a layer comprising a microporous polymer structure), obtained from company Chemours.

**Comparative Example 2**

A 40 micron thick composite electrolyte membrane comprised of ion exchange polymer perfluoro sulfonic acid resin with EW of 810 g/(mole acid equivalence) reinforced with one layer of expanded porous ePTFE comparative membrane #2 was prepared using conventional laboratory technique. Initially, a water-ethanol based solution of perfluoro sulfonic acid resin with EW = 810g/eq (obtained from obtained from Asahi Glass Company, Japan) with solids concentration of 27% was coated onto a moving substrate layer using a roll transfer method targeting nominal wet coating thickness of 180 micron, and laminated with an ePTFE comparative membrane #2. The substrate layer is a polymer sheet (obtained from DAICEL VALUE COATING LTD., Japan) comprising PET and a protective layer of cyclic olefin copolymer (COC), and is oriented with the COC side on top. This laminate was subsequently dried in an oven at 160° C and annealed at that temperature for 3 minute producing a solid coated structure comprising the carrier substrate coupled to a polymer layer reinforced with expanded porous polytetrafluoroethylene. The resulting composite electrolyte membrane comprised the substrate layer coupled to an ion exchange polymer layer followed by microporous polytetrafluoroethylene membrane layer with the ion exchange polymer embedded within and had total thickness of 40 micron and mass/area of 79 g/m$^2$ at 50%RH. The resulting composite electrolyte membrane was characterized by having ion exchange material that is embedded within the microporous polymer structure leaving a non-occlusive portion of the microporous polymer structure closest to the first surface and having a layer of ion exchange material with thickness less than 1 micron on the second surface of the microporous polymer structure.

**Results discussion**

The composite electrolyte membranes were characterized by performing the modulus of elasticity test and swelling ratio test described above. The modulus of elasticity of the composite electrolyte membrane of the inventive example 1 in the longitudinal direction was 732 MPa and in transverse direction was 858 MPa. The swelling ratio of the composite electrolyte membrane in inventive example 1 in longitudinal direction was 5.2% and in transverse direction was 2.1%.

As one can see from comparison with comparative example 2, the inventive composite electrolyte membranes have high modulus of elasticity and comprise ePTFE with high elastic modulus. The inventive composite electrolyte membranes present well-balanced elastic modulus of ePTFE in either of lateral direction (i.e. MD/TD), have reduced swelling ratio in the MD and TD directions while utilizing similar amount of components (e.g. ionomer mass per area based on the total mass of ionomer in the composite electrolyte membrane per area of the composite electrolyte membrane, ePTFE mass per area based on the total mass of ionomer in the composite electrolyte membrane per area of the composite electrolyte membrane, ePTFE vol %, based on the total volume of ePTFE present in the volume of the composite membrane) and type of ionomer (EW) as in comparative example 2.

To determine characteristics such as ultimate tensile strength in MD and TD, modulus, or swelling ratio of the composite electrolyte membrane and properties of the porous layers present in the composite electrolyte membranes, test procedures and measurement protocols were performed as described above. The properties of the porous layers were measured on the porous layer in its original state (i.e. before any ion exchange material was embedded in the porous layer).

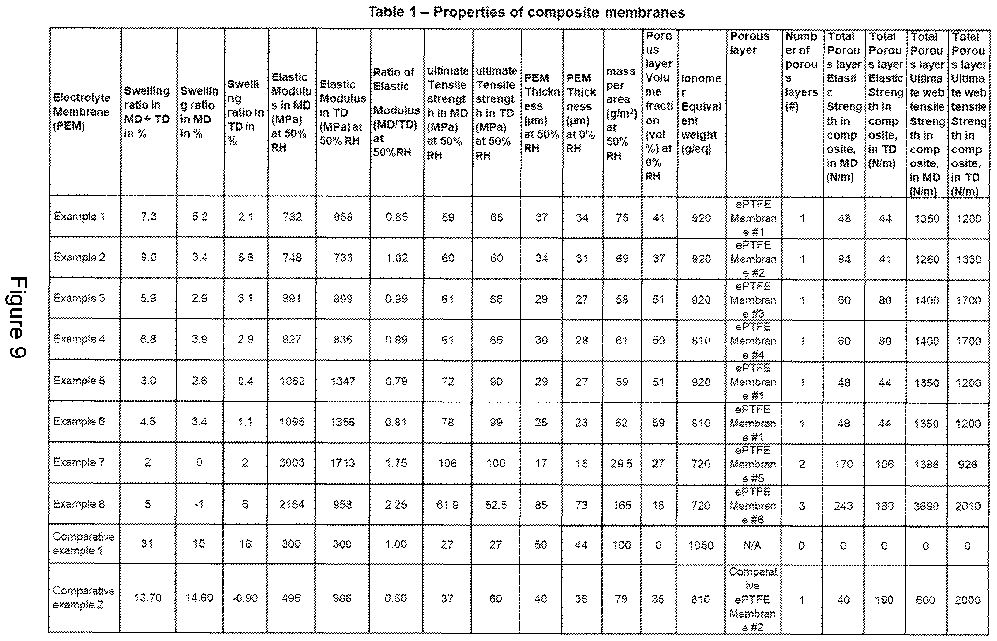

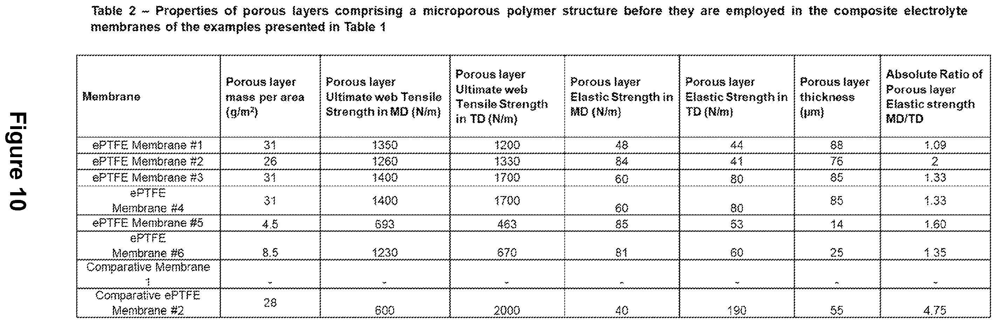

Table 2 (Figure 10) illustrates properties of the porous layers employed in the composite electrolyte membranes whose properties are presented in Table 1 (Figure 9).

**Claims**

**1.** A composite electrolyte membrane (100, 200, 870, 970, 1070), the composite electrolyte membrane comprising:

a) a single porous layer (110, 210, 810, 910, 1010) comprising a microporous polymer structure (120, 220), wherein the microporous polymer structure of the porous layer comprises expanded polytetrafluoroethylene (ePTFE); and
b) an ion exchange material (130, 230, 830, 930, 1030) at least partially embedded within the microporous polymer structure (120, 220) and rendering the microporous polymer structure (120, 220) occlusive,
wherein the composite electrolyte membrane (100, 200, 870, 970, 1070) has a modulus of elasticity in a first axial direction and a modulus of elasticity in a second axial direction of the composite electrolyte membrane of at least about 450 MPa at 50% relative humidity, when measured according to the tensile strength test described herein;
wherein the porous layer (110, 210, 810, 910, 1010) has an elastic strength in the first axial direction and an elastic strength in the second axial direction of the porous layer (110, 210, 810, 910, 1010) of at least 30 N/m, when measured according to the tensile strength test described herein;

wherein the absolute ratio of the modulus of elasticity of the composite electrolyte membrane (100, 200, 870, 970, 1070) in the first axial direction of the composite electrolyte membrane (100, 200, 870, 970, 1070) and the modulus of elasticity of the composite electrolyte membrane (100, 200, 870, 970, 1070) in the second axial direction of the composite electrolyte membrane (100, 200, 870, 970, 1070) is from 0.45 to 2.20,

wherein the first axial direction of the composite electrolyte membrane (100, 200, 870, 970, 1070) is the machine direction and second axial direction of the composite electrolyte membrane (100, 200, 870, 970, 1070) is the transverse direction, and wherein the first axial direction of the porous layer (110, 210, 810, 910, 1010) is aligned with the first axial direction of the composite electrolyte membrane (100, 200, 870), and the second axial direction of the porous layer (110, 210, 810, 910, 1010) is aligned with the second axial direction of the composite electrolyte membrane (100, 200, 870);

wherein the composite electrolyte membrane (100, 200, 870, 970, 1070) has a total content of microporous polymer structure (120, 220) (mass per unit area) from 30 $g \cdot m^{-2}$ to 80 $g \cdot m^{-2}$ based on the total area of the composite electrolyte membrane (100, 200, 870, 970, 1070).

2. The composite electrolyte membrane of claim 1, wherein:

- the absolute ratio of modulus of elasticity of the composite electrolyte membrane (100, 200, 870, 970, 1070) in the first axial direction and the second axial direction is from 0.45 to 2.10, or from 0.50 to 2.00, or from 0.80 to 1.20, or from 0.80 to 1.00, or from 0.80 to 0.90, or from 0.70 to 1.30, or from 0.60 to 1.80, or from 0.90 to 1.20, or from 1.00 to 1.20, or from 1.10 to 1.20; and/or

- the composite electrolyte membrane (100, 200, 870, 970, 1070) has a modulus of elasticity in the first axial direction of the composite electrolyte membrane (100, 200, 870, 970, 1070) and a modulus of elasticity in the second axial direction of the composite electrolyte membrane (100, 200, 870, 970, 1070) independently selected from: from 450 MPa to 2300 MPa at 50 % relative humidity, or from 600 MPa to 1500 MPa at 50 % relative humidity, of from 700 MPa to 800 MPa at 50 % relative humidity, when measured according to the tensile strength test described herein.

3. The composite electrolyte membrane of claim 1 or 2, wherein the absolute ratio of the elastic strength of the porous layer (110, 210, 810, 910, 1010) in the first axial direction of the porous layer (110, 210, 810, 910, 1010) and the elastic strength of the porous layer (110, 210, 810, 910, 1010) in the second axial direction of the porous layer (110, 210, 810, 910, 1010) is from 0.45 to 2.20, or from 0.45 to 2.10, or from 0.50 to 2.00, or from 0.80 to 1.20, or from 0.80 to 1.00, or from 0.80 to 0.90, or from 0.70 to 1.30, or from 0.60 to 1.80, or from 0.90 to 1.20, or from 1.00 to 1.20, or from 1.10 to 1.20.

4. The composite electrolyte membrane of any one of claims 1 to 3, wherein: the composite electrolyte membrane (100, 200, 870, 970, 1070) has an ultimate tensile strength in the first axial direction of the composite electrolyte membrane (100, 200, 870, 970, 1070) of at least 55 MPa when measured according to the tensile strength test described herein, and/or the composite electrolyte membrane (100, 200, 870, 970, 1070) has an ultimate tensile strength in the second axial direction of the composite electrolyte membrane (100, 200, 870, 970, 1070) of at least 60 MPa when measured according to the tensile strength test described herein.

5. The composite electrolyte membrane of any preceding claim, wherein:

- the total porous layer ultimate web tensile strength in the first axial direction of the porous layer (110, 210, 810, 910, 1010) is of at least 800 N/m when measured according to the tensile strength test described herein, and/or
- the total porous layer ultimate web tensile strength in the second axial direction of the porous layer (110, 210, 810, 910, 1010) is of at least 800 N/m when measured according to the tensile strength test described herein; and/or
- the total porous layer elastic strength in the first axial direction of the porous layer (110, 210, 810, 910, 1010) is of at least 30 N/m when measured according to the tensile strength test described herein, and/or
- the total porous layer elastic strength in the second axial direction of the porous layer (110, 210, 810, 910, 1010) is of at least 30 N/m when measured according to the tensile strength test described herein.

6. The composite electrolyte membrane of any preceding claim, wherein:

- the swelling ratio of the composite electrolyte membrane (100, 200, 870, 970, 1070) in the first direction of the composite electrolyte membrane (100, 200, 870, 970, 1070) is up to 6 % when measured in the swelling test described herein at 100 % relative humidity at 100 °C, optionally wherein the swelling ratio of the composite electrolyte membrane (100, 200, 870, 970, 1070) in the first direction of the composite electrolyte membrane is 5.2 % when measured in the swelling test described herein at 100 % relative humidity at 100 °C, and/or

- the swelling ratio of the composite electrolyte membrane (100, 200, 870, 970, 1070) in the second direction of the composite electrolyte membrane (100, 200, 870, 970, 1070) is equal or less than 6 % , or 7 %, when measured in the swelling test described herein at 100 % relative humidity at 100 °C, optionally wherein the swelling ratio of the composite electrolyte membrane (100, 200, 870, 970, 1070) in the second direction of the composite electrolyte membrane is 7 %, or 5 %, or 2 % when measured in the swelling test described herein at 100 % relative humidity at about 100 °C; and/or

- the composite electrolyte membrane (100, 200, 870, 970, 1070) preferentially swells in a third axial direction of the composite electrolyte membrane, optionally wherein the composite electrolyte membrane has a swelling at 100 % RH and at 100°C when measured according to the swelling test described herein described herein from 5 % to 150 % in a third axial direction of the composite electrolyte membrane (100, 200, 870, 970, 1070).

7.  A composite electrolyte membrane according to any preceding claim, wherein:

- the composite electrolyte membrane (100, 200, 870, 970, 1070) has a thickness (150, 250) from 10 $\mu$m to 115 $\mu$m when measured at 50 % relative humidity at 25°C in the thickness measurement test described herein, optionally wherein the composite electrolyte membrane has a thickness of 40 $\mu$m when measured at 50 % relative humidity at 25°C in the thickness measurement test described herein; and/or

- the porous layer (110, 210, 810, 910, 1010) has a thickness from 0.1 $\mu$m to 230 $\mu$m when measured at 50 % relative humidity at 25°C in the thickness measurement test described herein, optionally, wherein the porous layer has a thickness of 85 $\mu$m when measured at 50 % relative humidity at 25°C in the thickness measurement test described herein.

8.  A composite electrolyte membrane according to any preceding claim, wherein the ion exchange material (130, 230, 830, 930, 1030) comprises at least one ionomer, optionally wherein at least one of:

the ion exchange material comprises at least two ionomers;
the at least one ionomer comprises a proton conducting polymer, optionally wherein one of:

the proton conducting polymer comprises hydrocarbon ionomer;
the proton conducting polymer comprises perfluorinated ionomer;
the proton conducting polymer comprises perfluorosulfonic acid.

9.  A composite electrolyte membrane according to claim 8, wherein at least one of:

the at least one ionomer has a density not lower than 1.9 g/cc at 0% relative humidity at 25°C; and/or
the at least one ionomer has a total equivalent weight (EW) from 500 g/eq to 2000 g/eq, optionally wherein the ion exchange material has an equivalent weight of 900 g/eq, or wherein the ion exchange material has an equivalent weight of 1800 g/eq.

10.  A composite electrolyte membrane-electrode assembly (300) for an electrochemical device, comprising:

at least one electrode (310a); and
a composite electrolyte membrane (100, 200, 870, 970, 1070) according to any one of claims 1 to 9 in contact with the at least one electrode (310a), optionally wherein the composite electrolyte membrane (100, 200, 870, 970, 1070) is attached to the at least one electrode (310a).

11.  A composite electrolyte membrane-electrode assembly according to claim 10, wherein the composite electrolyte membrane-electrode assembly (300) is for a redox flow battery (RFB) (700), and optionally wherein the composite electrolyte membrane (100, 200, 870, 970, 1070) has a first surface and a second surface, and the electrode (310a) is a first electrode layer attached to the first surface of the composite electrolyte membrane and the membrane electrode assembly further comprises a second electrode layer (310b) attached to the second surface of the composite electrolyte membrane (100, 200, 870, 970, 1070).

12.  A composite electrolyte membrane-electrode assembly according to claim 10, wherein the composite electrolyte membrane-electrode assembly (300) is for an electrolyzer.

**Patentansprüche**

1. Verbund-Elektrolytmembran (100, 200, 870, 970, 1070), wobei die Verbund-Elektrolytmembran Folgendes umfasst:

   a) eine einzelne poröse Schicht (110, 210, 810, 910, 1010), die eine mikroporöse Polymerstruktur (120, 220) umfasst, wobei die mikroporöse Polymerstruktur der porösen Schicht expandiertes Polytetrafluorethylen (ePTFE) umfasst; und
   b) ein Ionenaustauschmaterial (130, 230, 830, 930, 1030), das zumindest teilweise innerhalb der mikroporösen Polymerstruktur (120, 220) eingebettet ist und die mikroporöse Polymerstruktur (120, 220) okklusiv macht,
   wobei die Verbund-Elektrolytmembran (100, 200, 870, 970, 1070) einen Elastizitätsmodul in einer ersten axialen Richtung und einen Elastizitätsmodul in einer zweiten axialen Richtung der Verbund-Elektrolytmembran von zumindest etwa 450 MPa bei 50 % relativer Luftfeuchtigkeit aufweist, wenn gemäß dem hierin beschriebenen Zugfestigkeitstest gemessen;
   wobei die poröse Schicht (110, 210, 810, 910, 1010) eine Elastizitätsfestigkeit in der ersten axialen Richtung und eine Elastizitätsfestigkeit in der zweiten axialen Richtung der porösen Schicht (110, 210, 810, 910, 1010) von zumindest 30 N/m aufweist, wenn gemäß dem hierin beschriebenen Zugfestigkeitstest gemessen;
   wobei das absolute Verhältnis des Elastizitätsmoduls der Verbund-Elektrolytmembran (100, 200, 870, 970, 1070) in der ersten axialen Richtung der Verbund-Elektrolytmembran (100, 200, 870, 970, 1070) und des Elastizitätsmoduls der Verbund-Elektrolytmembran (100, 200, 870, 970, 1070) in der zweiten axialen Richtung der Verbund-Elektrolytmembran (100, 200, 870, 970, 1070) von 0,45 bis 2,20 ist,
   wobei die erste axiale Richtung der Verbund-Elektrolytmembran (100, 200, 870, 970, 1070) die Maschinenrichtung ist und die zweite axiale Richtung der Verbund-Elektrolytmembran (100, 200, 870, 970, 1070) die Querrichtung ist, und wobei die erste axiale Richtung der porösen Schicht (110, 210, 810, 910, 1010) mit der ersten axialen Richtung der Verbund-Elektrolytmembran (100, 200, 870) ausgerichtet ist und die zweite axiale Richtung der porösen Schicht (110, 210, 810, 910, 1010) mit der zweiten axialen Richtung der Verbund-Elektrolytmembran (100, 200, 870) ausgerichtet ist;
   wobei die Verbund-Elektrolytmembran (100, 200, 870, 970, 1070) einen Gesamtgehalt an mikroporöser Polymerstruktur (120, 220) (Masse pro Flächeneinheit) von 30 g·m$^{-2}$ bis 80 g·m$^{-2}$ basierend auf der Gesamtfläche der Verbund-Elektrolytmembran (100, 200, 870, 970, 1070) aufweist.

2. Verbund-Elektrolytmembran nach Anspruch 1, wobei:

   - das absolute Verhältnis des Elastizitätsmoduls der Verbund-Elektrolytmembran (100, 200, 870, 970, 1070) in der ersten axialen Richtung und der zweiten axialen Richtung von 0,45 bis 2,10 oder von 0,50 bis 2,00 oder von 0,80 bis 1,20 oder von 0,80 bis 1,00 oder von 0,80 bis 0,90 oder von 0,70 bis 1,30 oder von 0,60 bis 1,80 oder von 0,90 bis 1,20 oder von 1,00 bis 1,20 oder von 1,10 bis 1,20 ist; und/oder
   - die Verbund-Elektrolytmembran (100, 200, 870, 970, 1070) einen Elastizitätsmodul in der ersten axialen Richtung der Verbund-Elektrolytmembran (100, 200, 870, 970, 1070) und einen Elastizitätsmodul in der zweiten axialen Richtung der Verbund-Elektrolytmembran (100, 200, 870, 970, 1070) unabhängig ausgewählt aus Folgendem aufweist: von 450 MPa bis 2300 MPa bei 50 % relativer Luftfeuchtigkeit oder von 600 MPa bis 1500 MPa bei 50 % relativer Luftfeuchtigkeit, von 700 MPa bis 800 MPa bei 50 % relativer Luftfeuchtigkeit, wenn gemäß dem hierin beschriebenen Zugfestigkeitstest gemessen.

3. Verbund-Elektrolytmembran nach Anspruch 1 oder 2, wobei das absolute Verhältnis der Elastizitätsfestigkeit der porösen Schicht (110, 210, 810, 910, 1010) in der ersten axialen Richtung der porösen Schicht (110, 210, 810, 910, 1010) und der Elastizitätsfestigkeit der porösen Schicht (110, 210, 810, 910, 1010) in der zweiten axialen Richtung der porösen Schicht (110, 210, 810, 910, 1010) von 0,45 bis 2,20 oder von 0,45 bis 2,10 oder von 0,50 bis 2,00 oder von 0,80 bis 1,20 oder von 0,80 bis 1,00 oder von 0,80 bis 0,90 oder von 0,70 bis 1,30 oder von 0,60 bis 1,80 oder von 0,90 bis 1,20 oder von 1,00 bis 1,20 oder von 1,10 bis 1,20 ist.

4. Verbund-Elektrolytmembran nach einem der Ansprüche 1 bis 3, wobei: die Verbund-Elektrolytmembran (100, 200, 870, 970, 1070) eine ultimative Zugfestigkeit in der ersten axialen Richtung der Verbund-Elektrolytmembran (100, 200, 870, 970, 1070) von zumindest 55 MPa aufweist, wenn gemäß dem hierin beschriebenen Zugfestigkeitstest gemessen, und/oder die Verbund-Elektrolytmembran (100, 200, 870, 970, 1070) eine ultimative Zugfestigkeit in der zweiten axialen Richtung der Verbund-Elektrolytmembran (100, 200, 870, 970, 1070) von zumindest 60 MPa aufweist, wenn gemäß dem hierin beschriebenen Zugfestigkeitstest gemessen.

5. Verbund-Elektrolytmembran nach einem vorhergehenden Anspruch, wobei:

- die ultimative Netzzugfestigkeit der gesamten porösen Schicht in der ersten axialen Richtung der porösen Schicht (110, 210, 810, 910, 1010) zumindest 800 N/m ist, wenn gemäß dem hierin beschriebenen Zugfestigkeitstest gemessen, und/oder
- die ultimative Netzzugfestigkeit der gesamten porösen Schicht in der zweiten axialen Richtung der porösen Schicht (110, 210, 810, 910, 1010) zumindest 800 N/m ist, wenn gemäß dem hierin beschriebenen Zugfestigkeitstest gemessen; und/oder
- die Elastizitätsfestigkeit der gesamten porösen Schicht in der ersten axialen Richtung der porösen Schicht (110, 210, 810, 910, 1010) zumindest 30 N/m ist, wenn gemäß dem hierin beschriebenen Zugfestigkeitstest gemessen, und/oder
- die Elastizitätsfestigkeit der gesamten porösen Schicht in der zweiten axialen Richtung der porösen Schicht (110, 210, 810, 910, 1010) zumindest 30 N/m ist, wenn gemäß dem hierin beschriebenen Zugfestigkeitstest gemessen.

6. Verbund-Elektrolytmembran nach einem vorhergehenden Anspruch, wobei:

- das Quellverhältnis der Verbund-Elektrolytmembran (100, 200, 870, 970, 1070) in der ersten Richtung der Verbund-Elektrolytmembran (100, 200, 870, 970, 1070) bis zu 6 % ist, wenn in dem hierin beschriebenen Quelltest bei 100 % relativer Luftfeuchtigkeit bei 100 °C gemessen, wobei optional das Quellverhältnis der Verbund-Elektrolytmembran (100, 200, 870, 970, 1070) in der ersten Richtung der Verbund-Elektrolytmembran 5,2 % ist, wenn in dem hierin beschriebenen Quelltest bei 100 % relativer Luftfeuchtigkeit bei 100 °C gemessen, und/oder
- das Quellverhältnis der Verbund-Elektrolytmembran (100, 200, 870, 970, 1070) in der zweiten Richtung der Verbund-Elektrolytmembran (100, 200, 870, 970, 1070) gleich oder weniger als 6 % oder 7 % ist, wenn in dem hierin beschriebenen Quelltest bei 100 % relativer Luftfeuchtigkeit bei 100 °C gemessen, wobei optional das Quellverhältnis der Verbund-Elektrolytmembran (100, 200, 870, 970, 1070) in der zweiten Richtung der Verbund-Elektrolytmembran 7 % oder 5 % oder 2 % ist, wenn in dem hierin beschriebenen Quelltest bei 100 % relativer Luftfeuchtigkeit bei etwa 100 °C gemessen; und/oder
- die Verbund-Elektrolytmembran (100, 200, 870, 970, 1070) bevorzugt in einer dritten axialen Richtung der Verbund-Elektrolytmembran quillt, wobei optional die Verbund-Elektrolytmembran eine Quellung bei 100 % RH und bei 100 °C, wenn gemäß dem hierin beschriebenen Quelltest gemessen, von 5 % bis 150 % in einer dritten axialen Richtung der Verbund-Elektrolytmembran (100, 200, 870, 970, 1070) aufweist.

7. Verbund-Elektrolytmembran nach einem vorhergehenden Anspruch, wobei:

- die Verbund-Elektrolytmembran (100, 200, 870, 970, 1070) eine Dicke (150, 250) von 10 $\mu$m bis 115 $\mu$m aufweist, wenn bei 50 % relativer Luftfeuchtigkeit bei 25 °C in dem hierin beschriebenen Dickenmesstest gemessen, wobei optional die Verbund-Elektrolytmembran eine Dicke von 40 $\mu$m aufweist, wenn bei 50 % relativer Luftfeuchtigkeit bei 25 °C in dem hierin beschriebenen Dickenmesstest gemessen; und/oder
- die poröse Schicht (110, 210, 810, 910, 1010) eine Dicke von 0,1 $\mu$m bis 230 $\mu$m aufweist, wenn bei 50 % relativer Luftfeuchtigkeit bei 25 °C in dem hierin beschriebenen Dickenmesstest gemessen, wobei optional die poröse Schicht eine Dicke von 85 $\mu$m aufweist, wenn bei 50 % relativer Luftfeuchtigkeit bei 25 °C in dem hierin beschriebenen Dickenmesstest gemessen.

8. Verbund-Elektrolytmembran nach einem vorhergehenden Anspruch, wobei das Ionenaustauschmaterial (130, 230, 830, 930, 1030) zumindest ein Ionomer umfasst, wobei optional zumindest eines von Folgendem gilt:

das Ionenaustauschmaterial umfasst zumindest zwei Ionomere;
das zumindest eine Ionomer umfasst ein protonenleitendes Polymer, wobei optional eines von Folgendem gilt:

das protonenleitende Polymer umfasst Kohlenwasserstoffionomer;
das protonenleitende Polymer umfasst perfluoriertes Ionomer;
das protonenleitende Polymer umfasst Perfluorsulfonsäure.

9. Verbund-Elektrolytmembran nach Anspruch 8, wobei zumindest eines von Folgendem gilt:

das zumindest eine Ionomer weist eine Dichte von nicht weniger als 1,9 g/cc bei 0 % relativer Luftfeuchtigkeit bei 25 °C auf; und/oder

das zumindest eine Ionomer weist ein Gesamtäquivalentgewicht (EW) von 500 g/eq bis 2000 g/eq auf, wobei optional das Ionenaustauschmaterial ein Äquivalentgewicht von 900 g/eq aufweist oder wobei das Ionenaustauschmaterial ein Äquivalentgewicht von 1800 g/eq aufweist.

10. Verbund-Elektrolytmembran-Elektrodenanordnung (300) für eine elektrochemische Vorrichtung, umfassend:

zumindest eine Elektrode (310a); und

eine Verbund-Elektrolytmembran (100, 200, 870, 970, 1070) nach einem der Ansprüche 1 bis 9 in Kontakt mit der zumindest einen Elektrode (310a), wobei optional die Verbund-Elektrolytmembran (100, 200, 870, 970, 1070) an der zumindest einen Elektrode (310a) angebracht ist.

11. Verbund-Elektrolytmembran-Elektrodenanordnung nach Anspruch 10, wobei die Verbund-Elektrolytmembran-Elektrodenanordnung (300) für eine Redox-Flow-Batterie (RFB) (700) ist und wobei optional die Verbund-Elektrolytmembran (100, 200, 870, 970, 1070) eine erste Oberfläche und eine zweite Oberfläche aufweist und die Elektrode (310a) eine erste Elektrodenschicht ist, die an der ersten Oberfläche der Verbund-Elektrolytmembran angebracht ist, und die Membran-Elektrodenanordnung ferner eine zweite Elektrodenschicht (310b) umfasst, die an der zweiten Oberfläche der Verbund-Elektrolytmembran (100, 200, 870, 970, 1070) angebracht ist.

12. Verbund-Elektrolytmembran-Elektrodenanordnung nach Anspruch 10, wobei die Verbund-Elektrolytmembran-Elektrodenanordnung (300) für einen Elektrolyseur ist.

**Revendications**

1. Membrane électrolytique composite (100, 200, 870, 970, 1070), la membrane électrolytique composite comprenant :

a) une unique couche poreuse (110, 210, 810, 910, 1010) comprenant une structure polymère microporeuse (120, 220), dans laquelle la structure polymère microporeuse de la couche poreuse comprend du polytétrafluoroéthylène expansé (ePTFE) ; et

b) un matériau d'échange d'ions (130, 230, 830, 930, 1030) au moins partiellement noyé dans la structure polymère microporeuse (120, 220) et rendant la structure polymère microporeuse (120, 220) occlusive,

dans laquelle la membrane électrolytique composite (100, 200, 870, 970, 1070) présente un module d'élasticité dans une première direction axiale et un module d'élasticité dans une deuxième direction axiale de la membrane électrolytique composite d'au moins environ 450 MPa à 50 % d'humidité relative, lorsqu'elle est mesurée selon le test de résistance à la traction décrit dans les présentes ;

dans laquelle la couche poreuse (110, 210, 810, 910, 1010) présente une résistance élastique dans la première direction axiale et une résistance élastique dans la deuxième direction axiale de la couche poreuse (110, 210, 810, 910, 1010) d'au moins 30 N/m, lorsqu'elle est mesurée selon le test de résistance à la traction décrit dans les présentes ;

dans laquelle le rapport absolu du module d'élasticité de la membrane électrolytique composite (100, 200, 870, 970, 1070) dans la première direction axiale de la membrane électrolytique composite (100, 200, 870, 970, 1070) et du module d'élasticité de la membrane électrolytique composite (100, 200, 870, 970, 1070) dans la deuxième direction axiale de la membrane électrolytique composite (100, 200, 870, 970, 1070) est compris entre 0,45 et 2,20,

dans laquelle la première direction axiale de la membrane électrolytique composite (100, 200, 870, 970, 1070) est la direction de la machine et la deuxième direction axiale de la membrane électrolytique composite (100, 200, 870, 970, 1070) est la direction transversale, et dans laquelle la première direction axiale de la couche poreuse (110, 210, 810, 910, 1010) est alignée avec la première direction axiale de la membrane électrolytique composite (100, 200, 870), et la deuxième direction axiale de la couche poreuse (110, 210, 810, 910, 1010) est alignée avec la deuxième direction axiale de la membrane électrolytique composite (100, 200, 870) ;

dans laquelle la membrane électrolytique composite (100, 200, 870, 970, 1070) présente une teneur totale en structure polymère microporeuse (120, 220) (masse par unité de surface) comprise entre 30 g·m$^{-2}$ et 80 g·m$^{-2}$ sur la base de la surface totale de la membrane électrolytique composite (100, 200, 870, 970, 1070).

2. Membrane électrolytique composite de la revendication 1, dans laquelle :

- le rapport absolu du module d'élasticité de la membrane électrolytique composite (100, 200, 870, 970, 1070) dans la première direction axiale et la deuxième direction axiale est compris entre 0,45 et 2,10, ou entre 0,50 et 2,00, ou entre 0,80 et 1,20, ou entre 0,80 et 1,00, ou entre 0,80 et 0,90, ou entre 0,70 et 1,30, ou entre 0,60 et 1,80, ou entre 0,90 et 1,20, ou entre 1,00 et 1,20, ou entre 1,10 et 1,20 ; et/ou

- la membrane électrolytique composite (100, 200, 870, 970, 1070) présente un module d'élasticité dans la première direction axiale de la membrane électrolytique composite (100, 200, 870, 970, 1070) et un module d'élasticité dans la deuxième direction axiale de la membrane électrolytique composite (100, 200, 870, 970, 1070) indépendamment sélectionné parmi : entre 450 MPa et 2 300 MPa à 50 % d'humidité relative, ou entre 600 MPa et 1 500 MPa à 50 % d'humidité relative, entre 700 MPa et 800 MPa à 50 % d'humidité relative, lorsqu'elle est mesurée selon le test de résistance à la traction décrit dans les présentes.

3. Membrane électrolytique composite de la revendication 1 ou 2, dans laquelle le rapport absolu de la résistance élastique de la couche poreuse (110, 210, 810, 910, 1010) dans la première direction axiale de la couche poreuse (110, 210, 810, 910, 1010) et la résistance élastique de la couche poreuse (110, 210, 810, 910, 1010) dans la deuxième direction axiale de la couche poreuse (110, 210, 810, 910, 1010) est compris entre 0,45 et 2,20, ou entre 0,45 et 2,10, ou entre 0,50 et 2,00, ou entre 0,80 et 1,20, ou entre 0,80 et 1,00, ou entre 0,80 et 0,90, ou entre 0,70 et 1,30, ou entre 0,60 et 1,80, ou entre 0,90 et 1,20, ou entre 1,00 et 1,20, ou entre 1,10 et 1,20.

4. Membrane électrolytique composite de l'une quelconque des revendications 1 à 3, dans laquelle : 1a membrane électrolytique composite (100, 200, 870, 970, 1070) présente une résistance à la traction ultime dans la première direction axiale de la membrane électrolytique composite (100, 200, 870, 970, 1070) d'au moins 55 MPa lorsqu'elle est mesurée selon le test de résistance à la traction décrit dans les présentes, et/ou la membrane électrolytique composite (100, 200, 870, 970, 1070) présente une résistance à la traction ultime dans la deuxième direction axiale de la membrane électrolytique composite (100, 200, 870, 970, 1070) d'au moins 60 MPa lorsqu'elle est mesurée selon le test de résistance à la traction décrit dans les présentes.

5. Membrane électrolytique composite d'une quelconque revendication précédente, dans laquelle :

- la résistance à la traction de l'âme de la couche poreuse totale dans la première direction axiale de la couche poreuse (110, 210, 810, 910, 1010) est d'au moins 800 N/m lorsqu'elle est mesurée selon le test de résistance à la traction décrit dans les présentes, et/ou
- la résistance à la traction de l'âme de la couche poreuse totale dans la deuxième direction axiale de la couche poreuse (110, 210, 810, 910, 1010) est d'au moins 800 N/m lorsqu'elle est mesurée selon le test de résistance à la traction décrit dans les présentes ; et/ou
- la résistance élastique de la couche poreuse totale dans la première direction axiale de la couche poreuse (110, 210, 810, 910, 1010) est d'au moins 30 N/m lorsqu'elle est mesurée selon le test de résistance à la traction décrit dans les présentes, et/ou
- la résistance élastique de la couche poreuse totale dans la deuxième direction axiale de la couche poreuse (110, 210, 810, 910, 1010) est d'au moins 30 N/m lorsqu'elle est mesurée selon le test de résistance à la traction décrit dans les présentes.

6. Membrane électrolytique composite d'une quelconque revendication précédente, dans laquelle :

- le taux de gonflement de la membrane électrolytique composite (100, 200, 870, 970, 1070) dans la première direction de la membrane électrolytique composite (100, 200, 870, 970, 1070) va jusqu'à 6 % lorsqu'il est mesuré dans le test de gonflement décrit dans les présentes à 100 % d'humidité relative à 100 °C, éventuellement dans laquelle le taux de gonflement de la membrane électrolytique composite (100, 200, 870, 970, 1070) dans la première direction de la membrane électrolytique composite est de 5,2 % lorsqu'il est mesuré dans le test de gonflement décrit ici à 100 % d'humidité relative à 100 °C, et/ou
- le taux de gonflement de la membrane électrolytique composite (100, 200, 870, 970, 1070) dans la deuxième direction de la membrane électrolytique composite (100, 200, 870, 970, 1070) est égal ou inférieur à 6 %, ou à 7 %, lorsqu'il est mesuré dans le test de gonflement décrit dans les présentes à 100 % d'humidité relative à 100 °C, éventuellement dans laquelle le taux de gonflement de la membrane électrolytique composite (100, 200, 870, 970, 1070) dans la deuxième direction de la membrane électrolytique composite est de 7 %, ou 5 %, ou 2 % lorsqu'il est mesuré dans le test de gonflement décrit dans les présentes à 100 % d'humidité relative à environ 100 °C ; et/ou
- la membrane électrolytique composite (100, 200, 870, 970, 1070) gonfle de préférence dans une troisième direction axiale de la membrane électrolytique composite, éventuellement dans laquelle la membrane électrolytique composite présente un gonflement à 100 % RH et à 100 °C lorsqu'elle est mesurée selon le test de gonflement décrit dans les présentes compris entre 5 % et 150 % dans une troisième direction axiale de la membrane électrolytique composite (100, 200, 870, 970, 1070).

7. Membrane électrolytique composite selon une quelconque revendication précédente, dans laquelle :

- la membrane électrolytique composite (100, 200, 870, 970, 1070) présente une épaisseur (150, 250) comprise entre 10 μm et 115 μm lorsqu'elle est mesurée à 50 % d'humidité relative à 25 °C dans le test de mesure d'épaisseur décrit dans les présentes, éventuellement dans laquelle la membrane électrolytique composite présente une épaisseur de 40 μm lorsqu'elle est mesurée à 50 % d'humidité relative à 25 °C dans le test de mesure d'épaisseur décrit dans les présentes ; et/ou
- la couche poreuse (110, 210, 810, 910, 1010) présente une épaisseur comprise entre 0,1 μm et 230 μm lorsqu'elle est mesurée à 50 % d'humidité relative à 25 °C dans le test de mesure d'épaisseur décrit dans les présentes, éventuellement, dans laquelle la couche poreuse présente une épaisseur de 85 μm lorsqu'elle est mesurée à 50 % d'humidité relative à 25 °C dans le test de mesure d'épaisseur décrit dans les présentes.

8. Membrane électrolytique composite selon une quelconque revendication précédente, dans laquelle le matériau d'échange d'ions (130, 230, 830, 930, 1030) comprend au moins un ionomère, éventuellement dans laquelle au moins l'un parmi :

le matériau échangeur d'ions comprend au moins deux ionomères ;
l'au moins un ionomère comprend un polymère conducteur de protons, éventuellement dans laquelle l'un parmi :

le polymère conducteur de protons comprend un ionomère hydrocarboné ;
le polymère conducteur de protons comprend un ionomère perfluoré ;
le polymère conducteur de protons comprend de l'acide perfluorosulfonique.

9. Membrane électrolytique composite selon la revendication 8, dans laquelle au moins l'un parmi :

l'au moins un ionomère présente une densité non inférieure à 1,9 g/cc à 0 % d'humidité relative à 25 °C ; et/ou
l'au moins un ionomère présente un poids équivalent total (EW) compris entre 500 g/éq et 2 000 g/éq, éventuellement dans laquelle le matériau d'échange d'ions présente un poids équivalent de 900 g/éq, ou dans laquelle le matériau d'échange d'ions présente un poids équivalent de 1 800 g/éq.

10. Ensemble membrane électrolytique composite-électrode (300) pour un dispositif électrochimique, comprenant :

au moins une électrode (310a) ; et
une membrane électrolytique composite (100, 200, 870, 970, 1070) selon l'une quelconque des revendications 1 à 9 en contact avec l'au moins une électrode (310a), éventuellement dans lequel la membrane électrolytique composite (100, 200, 870, 970, 1070) est fixée à l'au moins une électrode (310a).

11. Ensemble membrane électrolytique composite-électrode selon la revendication 10, dans lequel l'ensemble membrane électrolytique composite-électrode (300) est destiné à une batterie à flux redox (RFB) (700), et éventuellement dans lequel la membrane électrolytique composite (100, 200, 870, 970, 1070) présente une première surface et une seconde surface, et l'électrode (310a) est une première couche d'électrode fixée à la première surface de la membrane électrolytique composite et l'ensemble membrane-électrode comprend en outre une seconde couche d'électrode (310b) fixée à la seconde surface de la membrane électrolytique composite (100, 200, 870, 970, 1070).

12. Ensemble membrane électrolytique composite-électrode selon la revendication 10, dans lequel l'ensemble membrane électrolytique composite-électrode (300) est destiné à un électrolyseur.

Figure 1A

FIG. 1B

300

310a

240b          240a

250          220
             210
             230          200

310b

Figure 2

450                    450

400

Figure 3A

630          500a                    620

600

400

500b

400          Figure 3B

400'          400                    400'

Figure 3C

Figure 4

Figure 5

Figure 6

Figure 7

Figure 8

**Figure 9**

## Table 1 – Properties of composite membranes

| Electrolyte Membrane (PEM) | Swelling ratio in MD + TD in % | Swelling ratio in MD in % | Swelling ratio in TD in % | Elastic Modulus in MD (MPa) at 50% RH | Elastic Modulus in TD (MPa) at 50% RH | Ratio of Elastic Modulus (MD/TD) at 50%RH | ultimate Tensile strength in MD (MPa) at 50% RH | ultimate Tensile strength in TD (MPa) at 50% RH | PEM Thickness (µm) at 50% RH | PEM Thickness (µm) at 0% RH | mass per area (g/m²) at 50% RH | Porous layer Volume fraction (vol %) at 0% RH | Ionomer Equivalent weight (g/eq) | Porous layer | Number of porous layers (#) | Total Porous layer Elastic Strength in composite, in MD (N/m) | Total Porous layer Elastic Strength in composite, in TD (N/m) | Total Porous layer Ultimate web tensile Strength in composite, in MD (N/m) | Total Porous layer Ultimate web tensile Strength in composite, in TD (N/m) |
|---|---|---|---|---|---|---|---|---|---|---|---|---|---|---|---|---|---|---|---|
| Example 1 | 7.3 | 5.2 | 2.1 | 732 | 858 | 0.85 | 69 | 66 | 37 | 34 | 76 | 41 | 920 | ePTFE Membrane #1 | 1 | 48 | 44 | 1350 | 1200 |
| Example 2 | 9.0 | 3.4 | 5.6 | 748 | 733 | 1.02 | 60 | 60 | 34 | 31 | 69 | 37 | 920 | ePTFE Membrane #2 | 1 | 84 | 41 | 1260 | 1330 |
| Example 3 | 5.9 | 2.9 | 3.1 | 891 | 899 | 0.99 | 61 | 66 | 29 | 27 | 58 | 51 | 920 | ePTFE Membrane #3 | 1 | 60 | 80 | 1400 | 1700 |
| Example 4 | 6.8 | 3.9 | 2.9 | 827 | 836 | 0.99 | 61 | 66 | 30 | 28 | 61 | 50 | 810 | ePTFE Membrane #4 | 1 | 60 | 80 | 1400 | 1700 |
| Example 5 | 3.0 | 2.6 | 0.4 | 1062 | 1347 | 0.79 | 72 | 90 | 29 | 27 | 59 | 51 | 920 | ePTFE Membrane #1 | 1 | 48 | 44 | 1350 | 1200 |
| Example 6 | 4.5 | 3.4 | 1.1 | 1096 | 1356 | 0.81 | 78 | 99 | 26 | 23 | 62 | 59 | 810 | ePTFE Membrane #1 | 1 | 48 | 44 | 1350 | 1200 |
| Example 7 | 2 | 0 | 2 | 3003 | 1713 | 1.75 | 106 | 100 | 17 | 16 | 29.5 | 27 | 720 | ePTFE Membrane #5 | 2 | 170 | 106 | 1386 | 926 |
| Example 8 | 5 | -1 | 6 | 2164 | 958 | 2.25 | 61.9 | 52.5 | 85 | 73 | 165 | 16 | 720 | ePTFE Membrane #6 | 3 | 243 | 180 | 3690 | 2010 |
| Comparative example 1 | 31 | 15 | 16 | 300 | 300 | 1.00 | 27 | 27 | 50 | 44 | 100 | 0 | 1050 | N/A | 0 | 0 | 0 | 0 | 0 |
| Comparative example 2 | 13.70 | 14.60 | -0.90 | 496 | 986 | 0.50 | 37 | 60 | 40 | 36 | 79 | 36 | 810 | Comparative ePTFE Membrane #2 | 1 | 40 | 190 | 600 | 2000 |

Figure 10

Table 2 – Properties of porous layers comprising a microporous polymer structure before they are employed in the composite electrolyte membranes of the examples presented in Table 1

| Membrane | Porous layer mass per area (g/m²) | Porous layer Ultimate web Tensile Strength in MD (N/m) | Porous layer Ultimate web Tensile Strength in TD (N/m) | Porous layer Elastic Strength in MD (N/m) | Porous layer Elastic Strength in TD (N/m) | Porous layer thickness (µm) | Absolute Ratio of Porous layer Elastic strength MD/TD |
|---|---|---|---|---|---|---|---|
| ePTFE Membrane #1 | 31 | 1350 | 1200 | 48 | 44 | 88 | 1.09 |
| ePTFE Membrane #2 | 26 | 1260 | 1330 | 84 | 41 | 76 | 2 |
| ePTFE Membrane #3 | 31 | 1400 | 1700 | 60 | 80 | 85 | 1.33 |
| ePTFE Membrane #4 | 31 | 1400 | 1700 | 60 | 80 | 85 | 1.33 |
| ePTFE Membrane #5 | 4.5 | 693 | 463 | 85 | 53 | 14 | 1.60 |
| ePTFE Membrane #6 | 8.5 | 1230 | 670 | 81 | 60 | 25 | 1.35 |
| Comparative Membrane 1 | - | - | - | - | - | - | - |
| Comparative ePTFE Membrane #2 | 28 | 600 | 2000 | 40 | 190 | 55 | 4.75 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020023057 A1
- EP 2800194 A1